# EUROPEAN PATENT APPLICATION

(11) **EP 1 772 347 A1**
(43) Date of publication of application: **11.04.2007**
(21) Application number: 05751427.5
(22) Date of filing: 17.06.2005
(51) Int. Cl.: B62D 5/04, B60R 25/02

(54) **STEERING DEVICE FOR VEHICLE AND METHOD OF ASSEMBLING THE SAME**

(30) Priority: 17.06.2004 JP 2004180202; 17.06.2004 JP 2004180208; 18.06.2004 JP 2004181755
(71) Applicant: NSK LTD., Shinagawa-ku, Tokyo 141-8560 (JP)
(72) Inventor: KAWAIKE, Yuji c/o NSK STEERING SYSTEMS Co., Ltd., Gunma 371-8528 (JP); SANJI, Hiroaki c/o NSK STEERING SYSTEMS Co., Ltd., Gunma 371-8528 (JP); NEGISHI, Takeshi c/o NSK STEERING SYSTEMS Co., Ltd, Gunma 371-8528 (JP)
(74) Representative: Grünecker, Kinkeldey, Stockmair & Schwanhäusser Anwaltssozietät
(86) International application number: PCT/JP2005/011155
(87) International publication number: WO 2005/123485

(57) **Abstract**

A vehicle steering system includes: a sensor mechanism having a sensor coil 13; an antitheft device which has a key lock collar 4 and is disposed on the rear side of the sensor mechanism, in which the outer diameter of the key lock collar 4 of the antitheft device is larger than the inner diameter of the sensor coil 13 of the sensor mechanism; and a member 15 which has a diameter larger than the inner diameter of the sensor coil 13 and which is disposed on the front side of the sensor mechanism, wherein a steering shaft 3 or 6 to which the member 15 having the large diameter is fixed is inserted to the sensor coil 13 and then the key lock collar 4 is fitted to the steering shaft 3 or 6.

## Description

### Technical Field

The present invention relates to a vehicle steering system such as an electric power steering system including a sensor mechanism and an antitheft device disposed on the rear side thereof and a method of assembling the vehicle steering system.

### Background Art

An electric power steering system for a vehicle is known which steers vehicle wheels by decelerating rotation of an electric motor, which becomes auxiliary steering torque, by the use of a gear to supply the decelerated rotation to an output shaft of a steering mechanism and auxiliary steering force applied to a steering wheel. In such an electric power steering system, the rotation of the electric motor is decelerated using a decelerating mechanism disposed in a housing and is supplied to the output shaft.

In the electric power steering system, an input shaft receiving the steering force from the steering wheel and an output shaft supplying the steering force to the vehicle wheels are connected to each other through a torsion bar. The steering torque necessary for output control of the auxiliary steering force is adjusted on the basis of the detection result of torsion torque associated with the torsion bar.

Generally, the input shaft is fitted as follows. That is, a column member is fixed to a sensor housing, and a sensor coil of a sensor mechanism is fitted thereto, and then the input shaft is inserted into the column member from the sensor housing side.

On the other hand, in order to prevent theft of a vehicle, an antitheft device is provided in the vehicle. When a driver pulls out a key, the input shaft is fixed to the column member and thus the steering wheel is maintained in a non-rotatable state.

In the antitheft device, a key lock collar having a plurality of holes is fixed to the outer peripheral surface of the input shaft by pressing, etc. When the driver pulls out the key, a shaft advancing and retracting in the diameter direction from the column member side enters and engages with the hole of the key lock collar. Accordingly, the input shaft or the steering wheel can be maintained in a non-rotatable state.

When supporting the same torque, it is obvious that a large-diameter portion can apply force smaller than a small-diameter portion. Accordingly, when the key lock collar has a large diameter, the strength of the key lock collar can be reduced. That is, since the force associated with a key bolt advancing and retracting is reduced, the key bolt engaging with the hole of the key lock collar need not high strength and force-receiving portions (the housing into which the key bolt is inserted, the holes of the column portion receiving the force from the housing, etc.) can be designed to have small strength.

When a slip ring is used, slip torque is determined by the diameter of the shaft and the inner diameter of the key lock collar. At this time, when the diameter of the shaft is large, the slip torque is insensitive to the diameter. Accordingly, when a product is in a certain range of slip torque, machining precision is not necessary, thereby reducing production cost.

However, when a sensor unit is used, the key lock collar cannot be formed to have a large diameter due to the restriction by the inner diameter of the sensor coil.

Methods of setting the diameter of the key lock collar to be larger than the inner diameter of the sensor coil are disclosed in Patent Documents 1 to 3 to be described later.

In this way, when the key lock is intended to have a large diameter, the outer diameter of the key lock collar is larger than the inner diameter of the sensor coil fitted into the sensor housing. A worm wheel as a decelerating mechanism having a diameter larger than the inner diameter of the sensor coil is fitted to the output shaft.

That is, the input shaft and the output shaft have the worm wheel larger than the inner diameter on the front side and the key lock collar larger than the inner diameter on the rear side.

Accordingly, in Patent Documents 1 to 3, when an electric power steering system is assembled, the input shaft is divided into two portions of a front portion and a rear portion. The key lock collar is fixed to the rear input shaft, the output shaft fitted with the work wheel is coupled to the front input shaft, and then the shaft is inserted to the sensor housing, thereby forming a sub assembly.

Thereafter, the rear input shaft to which the key lock collar is fixed is coupled to the front input shaft of the sub assembly, thereby completing the assembly.
Patent Document 1: Japanese Unexamined Patent Application Publication No. 2000-85596
Patent Document 2: Japanese Unexamined Patent Application Publication No. 2000-318626
Patent Document 3: Japanese Unexamined Patent Application Publication No. 2003-72566

However, as described in Patent Documents 1 to 3, when the input shaft of the electric power steering system is divided into two portions so as to fit the key lock collar of the antitheft device, the number of parts is increased and the assembly work of the divided parts is complicated, thereby causing increase in production cost.

In order to solve such a problem, it may be considered to simply increase the inner diameter of the sensor coil. However, when a coil is newly designed, considerable time is necessary and production cost is increased. The inner diameter of the sensor coil, etc. is standardized and the diameter of the steering shaft, etc. is limited accordingly.

### Disclosure of the Invention

### Problem that the Invention is to Solve

The present invention is contrived in view of the above-mentioned situations. An object of the invention is to provide an electric power steering system and a method of assembling the electric power steering system, which cannot increase the number of parts, can be fitted with a key lock collar having a diameter larger than the inner diameter of a sensor coil, can easily fit a worm wheel, and can freely set the diameter of the key lock collar.

### Means for Solving the Problem

In order to accomplish the above-mentioned object, according to a first aspect of the invention, there is provided
1. A vehicle steering system comprising:
   a sensor mechanism having a sensor coil;
   an antitheft device which has a key lock collar and is disposed on a rear side of the sensor mechanism, in which an outer diameter of the key lock collar of the antitheft device is larger than an inner diameter of the sensor coil of the sensor mechanism; and
   a member which has a diameter larger than the inner diameter of the sensor coil which is disposed on a front side of the sensor mechanism,
   wherein a steering shaft, to which the member having the large diameter is fixed, is inserted to the sensor coil and then the key lock collar is fitted to the steering shaft.

According to a second aspect of the invention, in the vehicle steering system according to the first aspect, the steering shaft has a jig mounting portion mounted with a jig used at the time of fitting the key lock collar.

According to a third aspect of the invention, in the vehicle steering system according to the second aspect, the jig mounting portion is a diameter-changed portion of which the diameter is changed and which is formed in the steering shaft.

According to a fourth aspect of the invention, in the vehicle steering system according to the second aspect, the jig mounting portion is a groove which is disposed in the steering shaft and which is formed of a ring-shaped flange portion.

According to a fifth aspect of the invention, in the vehicle steering system according to the second aspect, the jig mounting portion is a hole formed in the steering shaft.

According to a sixth aspect of the invention, there is provided a method of assembling a vehicle steering system, which comprises:
a sensor mechanism having a sensor coil;
an antitheft device which has a key lock collar and is disposed on a rear side of the sensor mechanism, in which an outer diameter of the key lock collar of the antitheft device is larger than an inner diameter of the sensor coil of the sensor mechanism; and
a member which has a diameter larger than the inner diameter of the sensor coil which is disposed on a front side of the sensor mechanism,
the assembling method comprising:
   fixing the member having the large diameter to a steering shaft;
   inserting the steering shaft to the sensor coil; and
   fitting the lock key collar to the steering shaft.

According to a seventh aspect of the invention, in the method according to the sixth aspect, the steering shaft has a jig mounting portion fitted with a jig used to fit the key lock collar, and
wherein the jig mounting portion receives an axial load when the key lock collar is provided.

According to an eighth aspect of the invention, in the method according to the seventh aspect, the jig mounting portion is a diameter-changed portion of which the diameter is changed and which is formed in the steering shaft.

According to a ninth aspect of the invention, in the method according to the seventh aspect, the jig mounting portion is a groove which is disposed in the steering shaft and which is formed of a ring-shaped flange portion.

According to a tenth aspect of the invention, in the method according to the seventh aspect, the jig mounting portion is a hole formed in the steering shaft.

According to an eleventh aspect of the invention, there is provided an electric power steering system comprising:
a driven gear of a speed reducer disposed on a front side of a sensor mechanism; and
a key lock collar of an antitheft device disposed on a rear side of the sensor mechanism,
wherein outer diameters of the driven gear and the key lock collar are larger than an inner diameter of a sensor coil of the sensor mechanism,
wherein auxiliary steering torque is generated from an electric motor so as to correspond to steering torque applied to a steering wheel, is decelerated by the speed reducer, and then is supplied to an output shaft of a steering mechanism, and
wherein a steering shaft, to which the key lock collar is fixed, is inserted to the sensor coil and then the driven gear is fitted to the steering shaft.

According to a twelfth aspect of the invention, in the electric power steering system according to the eleventh aspect, when "α" is a distance between a rear end of a housing and a front end of the key lock collar and "β" is a distance between a front end of the housing and a front surface of a jig groove of the output shaft, "α>β" is set.

According to a thirteenth aspect of the invention, in the electric power steering system according to the eleventh or twelfth aspect, the steering shaft has a jig mounting portion mounted with a jig used at the time of fitting the driven gear.

According to a fourteenth aspect of the invention, in the electric power steering system according to the thirteenth aspect, the jig mounting portion is an output shaft fixing screw formed in the steering shaft.

According to a fifteenth aspect of the invention, in the electric power steering system according to the thirteenth aspect, the jig mounting portion is a diameter-changed portion which is disposed in the steering shaft and of which the diameter is changed.

According to a sixteenth aspect of the invention, in the electric power steering system according to the thirteenth aspect, the jig mounting portion is a partial plane portion formed in the steering shaft.

According to a seventeenth aspect of the invention, there is provided a method of assembling an electric power steering system, which comprises:
a driven gear of a speed reducer disposed on a front side of a sensor mechanism; and
a key lock collar of an antitheft device disposed on a rear side of the sensor mechanism,
wherein outer diameters of the driven gear and the key lock collar are larger than an inner diameter of a sensor coil of the sensor mechanism, and
wherein auxiliary steering torque is generated from an electric motor so as to correspond to steering torque applied to a steering wheel, is decelerated by the speed reducer, and then is supplied to an output shaft of a steering mechanism,
the assembling method comprising:
   fixing the key lock collar to a steering shaft;
   inserting the steering shaft is to the sensor coil; and
   fitting the driven gear to the steering shaft.

According to an eighteenth aspect of the invention, in the method according to the seventeenth aspect, when "α" is a distance between a rear end of a housing and a front end of the key lock collar and "β" is a distance between a front end of the housing and a front surface of a jig groove of the output shaft, "α>β" is set.

According to a nineteenth aspect of the invention, in the method according to the seventeenth or eighteenth aspect, the steering shaft has a jig mounting portion mounted with a jig used at the time of fitting the driven gear.

According to a twentieth aspect of the invention, in the method according to the nineteenth aspect, the jig mounting portion is an output shaft fixing screw formed in the steering shaft.

According to a twenty-first aspect of the invention, in the method according to the nineteenth aspect, the jig mounting portion is a diameter-changed portion which is disposed in the steering shaft and of which the diameter is changed.

According to a twenty-second aspect of the invention, in the method according to the nineteenth aspect, the jig mounting portion is a partial plane portion formed in the steering shaft.

According to a twenty-third aspect of the invention, there is provided a vehicle steering system comprising:
an input shaft which is fitted in advance with a key lock collar of an antitheft device, the key lock collar having a diameter larger than an inner diameter of a sensor coil of a sensor mechanism, on a rear side of the sensor mechanism; and
an output shaft which is fitted in advance with a member, which has a diameter larger than an inner diameter of the sensor coil, on a front side of the sensor mechanism,
wherein the input shaft and the output shaft are coupled to each other on an inside of the sensor coil with the sensor coil of the sensor mechanism located at a middle position between the input shaft and the output shaft, and
wherein a fixing pin is inserted to a torsion bar fixed in advance to one of the shafts and the torsion bar is fitted to the other thereof.

According to a twenty-fourth aspect of the invention, in the vehicle steering system according to the twenty-third aspect, the fixation to the one shaft is carried out by pressing.

According to a twenty-fifth aspect of the invention, in the vehicle steering system according to the twenty-third, the fixation to the one shaft is carried out by using a pin.

According to a twenty-sixth aspect of the invention, there is provided a method of assembling a vehicle steering system comprising:
an input shaft which is fitted in advance with a key lock collar of an antitheft device, the key lock collar having a diameter larger than an inner diameter of a sensor coil of a sensor mechanism, on a rear side of the sensor mechanism; and
an output shaft which is fitted in advance with a member, which has a diameter larger than an inner diameter of the sensor coil, on a front side of the sensor mechanism,
the assembling method comprising:
   coupling the input shaft and the output shaft each other on an inside of the sensor coil with the sensor coil of the sensor mechanism located at a middle position between the input shaft and the output shaft; and
   inserting a fixing pin to a torsion bar fixed in advance to one of the shafts and fitting the torsion bar to the other thereof.

According to a twenty-seventh aspect of the invention, in the method according to the twenty-sixth aspect, the fixation to the one shaft is carried out by pressing.

According to a twenty-eighth aspect of the invention, in the method according to the twenty-sixth aspect, the fixation to the one shaft is carried out by using a pin.

### Advantage of the Invention

As described above, according to the first to tenth aspects of the invention, the large-diameter member (for example, worm wheel) is fixed or the key lock collar is fitted later to the steering shaft (input shaft and output shaft) having been inserted to the sensor coil. Accordingly, it is possible to easily fit the key lock collar having a diameter larger than the inner diameter of the sensor coil without increasing the number of parts.

Since the key lock collar is fitted later, the assembling method according to the invention is applicable to a steering shaft (input shaft) having a collapse structure.

Since the key lock collar is fitted later, the assembling method according to the invention is applicable to a steering system having a torque sensor mechanism without having a power assist mechanism. In this case, the large-diameter member is a yoke of a universal joint formed integrally with the output shaft.

According to the eleventh to twenty-second aspects of the invention, the driven gear is fitted later to the steering shaft to which the key lock collar has been fixed and which has been inserted to the sensor coil. Accordingly, it is possible to easily fit the key lock collar having a diameter larger than the inner diameter of the sensor coil without increasing the number of parts. It is possible to easily fit the worm wheel and to freely set the diameter of the key lock collar.

Since the driven gear is fitted later, the assembling method according to the invention is applicable to a steering shaft (input shaft) having a collapse structure.

Since the fitting portion of the driven gear to the steering shaft is hardly limited, a maker of the electric power steering system can perform a free design. Accordingly, an effect of design standardization can be expected.

According to the twenty-third to twenty-eighth aspects of the invention, even when the input shaft and the output shaft have the key lock collar on the rear side and the worm wheel on the front side, both of which have a diameter larger than the inner diameter of the sensor coil disposed between the input shaft and the output shaft, it is possible to easily fit the key lock collar having a diameter larger than the inner diameter of the sensor coil without increasing the number of parts.

Even when the sensor shaft has a collapse structure or a telescopic structure, it is possible to fit the key lock collar having a diameter larger than the inner diameter of the sensor coil.

### Brief Description of the Drawings

Fig. 1 is a longitudinal sectional view illustrating an electric power steering system according to a first embodiment of the invention.
Fig. 2A is a longitudinal sectional view illustrating an electric power steering system according to a second embodiment of the invention.
Fig. 2B is a cross-sectional view taken along Line b-b of Fig. 2A.
Fig. 3 is a longitudinal sectional view illustrating an electric power steering system according to a third embodiment of the invention.
Fig. 4A is a longitudinal sectional view illustrating an electric power steering system according to a fourth embodiment of the invention.
Fig. 4B is a cross-sectional view taken along Line b-b of Fig. 4A.
Fig. 5 is a longitudinal sectional view illustrating an electric power steering system according to a fifth embodiment of the invention.
Fig. 6 is a longitudinal sectional view illustrating an electric power steering system according to a sixth embodiment of the invention.
Fig. 7 is a longitudinal sectional view illustrating an electric power steering system according to a seventh embodiment of the invention.
Fig. 8 is a longitudinal sectional view illustrating an electric power steering system according to an eighth embodiment of the invention.
Fig. 9A is a longitudinal sectional view illustrating an electric power steering system according to a ninth embodiment of the invention.
Fig. 9B is a longitudinal sectional view illustrating a part of an electric power steering system according to a reference example of the ninth embodiment.
Fig. 10 is a longitudinal sectional view illustrating the electric power steering system according to the ninth embodiment of the invention, which shows a process of fixing a worm wheel and a state where a jig is fitted.
Fig. 11 is a longitudinal sectional view illustrating a part of an electric power steering system according to a modified example of the ninth embodiment.
Fig. 12 is a longitudinal sectional view illustrating an electric power steering system according to a tenth embodiment of the invention.
Fig. 13 is a longitudinal sectional view illustrating an electric power steering system according to an eleventh embodiment of the invention.
Fig. 14A is a longitudinal sectional view illustrating an electric power steering system according to a twelfth embodiment of the invention.
Fig. 14B is a cross-sectional view taken along Line b-b of Fig. 14A.
Fig. 15 is a longitudinal sectional view illustrating an electric power steering system according to a thirteenth embodiment of the invention.
Fig. 16 is an assembly diagram of the electric power steering system shown in Fig. 15 and is a longitudinal sectional view of an input shaft.
Fig. 17 is an assembly diagram of the electric power steering system shown in Fig. 15 and is a longitudinal sectional view of an output shaft.
Fig. 18 is a longitudinal sectional view illustrating an input shaft of a first modified example of the thirteenth embodiment.
Fig. 19 is a longitudinal sectional view illustrating an input shaft of a second modified example of the thirteenth embodiment.
Fig. 20 is a longitudinal sectional view illustrating an input shaft of a third modified example of the thirteenth embodiment.
Fig. 21 is a longitudinal sectional view illustrating an electric power steering system according to a fourteenth embodiment of the invention.
Fig. 22A is a longitudinal sectional view illustrating an electric power steering system according to a fifteenth embodiment of the invention.
Fig. 22B is a cross-sectional view taken along Line b-b of Fig. 22A.

### Description of Reference Numerals and Signs

- 1:: STEERING COLUMN
- 1a:: HOLE
- 2:: BEARING
- 3:: INPUT SHAFT
- 3a:: FITTING SCREW
- 3b:: FITTING RECESS
- 4:: KEY LOCK COLLAR
- 4a:: HOLE
- 4b:: FITTING PROTRUSION
- 5:: SLIP RING
- 6:: OUTPUT SHAFT
- 7:: TORSION BAR
- 8:: GEAR HOUSING (HOUSING)
- 8a, 8b:: BEARING
- 9:: COVER
- 9a, 9b:: BEARING
- 10:: FIXING PIN
- 11:: DETECTING GROOVE
- 12:: SLEEVE
- 13:: SENSOR COIL
- 14:: WORM
- 15:: WORM WHEEL
- 21:: UPPER COLUMN
- 21a:: HOLE
- 22:: LOWER COLUMN
- 31:: UPPER SHAFT
- 32:: LOWER SHAFT
- 40:: UNIVERSAL JOINT
- 41, 43:: YOKE
- 42:: CROSS SHAFT
- 51:: RING-SHAPED FLANGE PORTION
- 52:: GROOVE
- 61:: HOLE
- 101:: STEERING COLUMN
- 101a:: HOLE
- 102:: BEARING
- 103:: INPUT SHAFT
- 104:: KEY LOCK COLLAR
- 104a:: HOLE
- 105:: SLIP RING
- 106:: OUTPUT SHAFT
- 106a:: LARGE-DIAMETER PORTION
- 106b:: SERRATED PORTION
- 106c:: TAPERED PORTION
- 107:: TORSION BAR
- 108:: HOUSING
- 108a:: BEARING
- 109:: COVER
- 109a, 109b, 109c:: BEARING
- 110:: FIXING PIN
- 111:: DETECTING GROOVE
- 112:: SLEEVE
- 113:: SENSOR COIL
- 114:: WORM
- 115:: WORM WHEEL
- 116:: NUT
- 117:: JIG GROOVE
- 121:: UPPER COLUMN
- 121a:: HOLE
- 122:: LOWER COLUMN
- 131:: UPPER SHAFT
- 132:: LOWER SHAFT
- 140:: O RING
- 150:: SLIP RING
- 160:: PARTIAL PLANE PORTION
- 100S:: STEP (DIAMETER-CHANGED PORTION)
- 100G:: JIG
- 201:: STEERING COLUMN
- 201a:: HOLE
- 202:: BEARING
- 203:: INPUT SHAFT
- 204:: KEY LOCK COLLAR
- 204a:: HOLE
- 205:: SLIP RING
- 206:: OUTPUT SHAFT
- 207:: TORSION BAR
- 208:: GEAR HOUSING (HOUSING)
- 208a:: HOLE
- 209:: COVER
- 209a,: 209b: BEARING
- 210:: FIXING PIN
- 211:: DETECTING GROOVE
- 212:: SLEEVE
- 213:: SENSOR COIL
- 214:: WORM
- 215:: WORM WHEEL
- 216:: SEAL MEMBER
- 217:: BOLT
- 218:: BOLT
- 219:: INJECTION PORTION
- 220:: COUPLING PORTION
- 221:: MALE SPLINE PORTION
- 222:: FEMALE SPLINE PORTION
- 223:: FITTING NUT
- 230:: HOUSING
- 230a:: HOLE
- 231:: UNIVERSAL JOINT
- 231a:: YOKE
- 232a:: BEARING
- 232b:: BEARING
- 233:: BEARING

### BEST MODE FOR CARRYING OUT THE INVENTION

Hereinafter, a vehicle steering system and a method of assembling the same according to embodiments of the invention will be described with reference to the drawings.

### (First Embodiment)

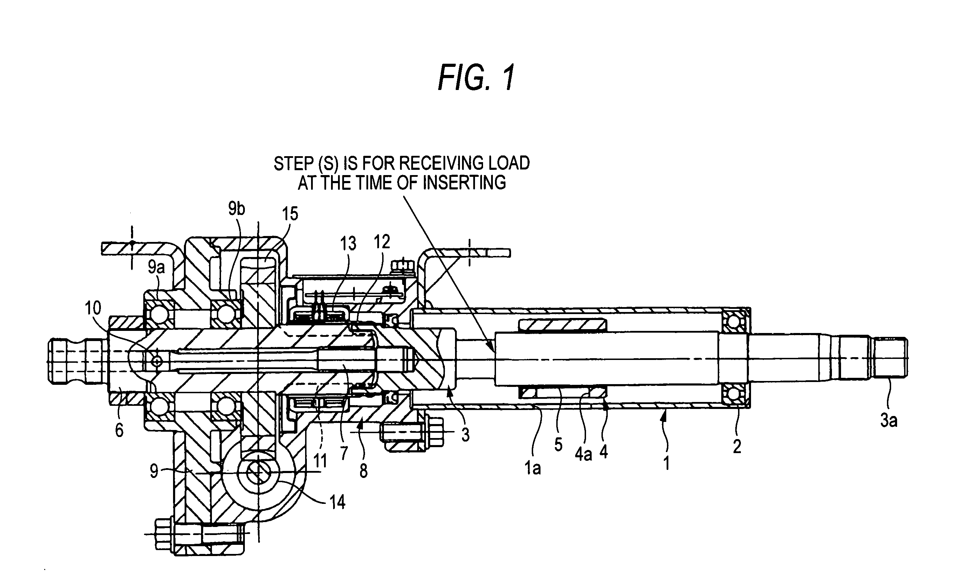

Fig. 1 is a longitudinal sectional view illustrating an electric power steering system according to a first embodiment of the invention.

An assembled electric power steering system according to this embodiment will be first described and a method of assembling the electric power steering system will be then described.

In the column-assisted electric power steering system shown in Fig. 1, an input shaft 3 of a steering shaft is rotatably supported by a steering column 1 having a non-collapse structure with a bearing 2 interposed therebetween.

Reference numeral "3a" denotes a fixing screw for fixing a steering wheel (not shown).

A key lock collar 4 of an antitheft device is pressed to a middle portion of the input shaft 3 with a slip ring 5 interposed therebetween. When a driver pulls out a key, a shaft (not shown) advancing and retracting in a diameter direction from a hole 1a of the steering column 1 enters and engages with a hole 4a of the key lock collar 4. Accordingly, the input shaft 3 or the steering wheel (not shown) can be maintained in a non-rotating state.

When torque greater than a predetermined value is applied to the key lock collar 4, the slip ring 5 permits the relative rotation about the input shaft 3.

As described later, a step S (diameter-changed portion) having a diameter smaller than the other portion is provided on the front side of the input shaft 3.

An output shaft 6 is connected to the front portion of the input shaft 3 through a torsion bar 7 described later. The output shaft 6 is inserted to a gear housing 8 or a cover 9 and a steering gear (not shown) is connected to the front portion of the output shaft through a universal joint (not shown). The output shaft 6 is rotatably supported by bearings 9a and 9b of the cover.

A base end of the torsion bar 7 is pressed and fixed to the front portion of the input shaft 3. The torsion bar 7 extends through the insider of the output shaft 6 which is hollow and the end thereof is fixed to the end of the output shaft 6 by a fixing pin 10.

A detecting groove 11 of a torque sensor mechanism is formed on the rear portion of the output shaft 6. A sleeve 12 of the torque sensor mechanism is disposed on the outside in the diameter direction of the detecting groove 11. The sleeve 12 is fixed by fastening the rear end thereof to the front end of the input shaft 3. A coil 13 or a board is disposed on the outside in the diameter direction of the sleeve 12.

A worm wheel 15 engaging with a worm 14 which is a driving shaft of an electric motor (not shown) is fitted and fixed to the output shaft 6.

Accordingly, steering force generated by allowing a driver to steer a steering wheel (not shown) is supplied to a rudder wheel not shown via the input shaft 3, the torsion bar 7, the output shaft 6, and a rack-and-pinion steering gear. The rotary power of the electric motor is supplied to the output shaft 6 through the work 14 and the worm wheel 15 and appropriate auxiliary steering torque is applied to the output shaft 6 by appropriately controlling the rotary power and the rotation direction of the electric motor.

When the electric power steering system having a non-collapse structure described above is assembled, the input shaft 3 is fitted in advance to the gear housing 8 to form a sub assembly. That is, in the sub assembly, the worm wheel 15 is fitted to the output shaft 6, the torsion bar 7 or the input shaft 3 is coupled thereto, and the steering shaft (the input shaft 3 and the output shaft 6) is inserted to the inside of the sensor coil 13 having a small diameter.

The key lock collar 4 is fitted to the input shaft 3 of the sub assembly with the slip ring 5 interposed therebetween by pressing or the like.

The steering column 1 is coupled to the gear housing 8 of the sub assembly, thereby completing the electric power steering system.

In this embodiment, the middle portion of the steering shaft (the input shaft 3 and the output shaft 6) is inserted to the small-diameter sensor coil 13 and the worm wheel 15 having a diameter larger than that of the coil 13 and the key lock collar 4 having a diameter larger than that of the coil 13 are fitted to both ends thereof, respectively. In this case, since the worm wheel 15 is fixed and the key lock collar 4 is fitted later to the steering shaft (the input shaft 3 and the output shaft 6) having been inserted to the sensor coil 13, it is possible to easily fit the key lock collar 4 having a diameter larger than the inner diameter of the sensor coil 13 without increasing the number of parts.

In this embodiment, a step S (diameter-changed portion) having a small diameter is disposed on the front side of the input shaft 3. The step S (diameter-changed portion) serves as a jig mounting portion mounted with a jig at the time of fitting the key lock collar.

At the time of fitting the key lock collar 4 to the input shaft 3 from the steering wheel (not shown) side, the key lock collar 4 is pressed in the axis direction and thus an axial load is generated. At this time, the step S can receive the axial load. Accordingly, extra load cannot be supplied to the sensor mechanism connected to the input shaft 3.

By using a steering wheel mounting screw 3a instead of the step S (diameter-changed portion), the axial load at the time of pressing may be attracted by the steering wheel (not shown).

In another method, the key lock collar 4 is pressed by allowing the key lock collar to pass through the input shaft 3 before passing through the slip ring 5 and moving the key lock collar 4 to the steering wheel (not shown) so as to cover the slip ring at a predetermined position.

In this case, the step S (diameter-changed portion) is not necessary and the pressing load may be received by an end surface of the steering wheel mounting screw 3a.

### (Second Embodiment)

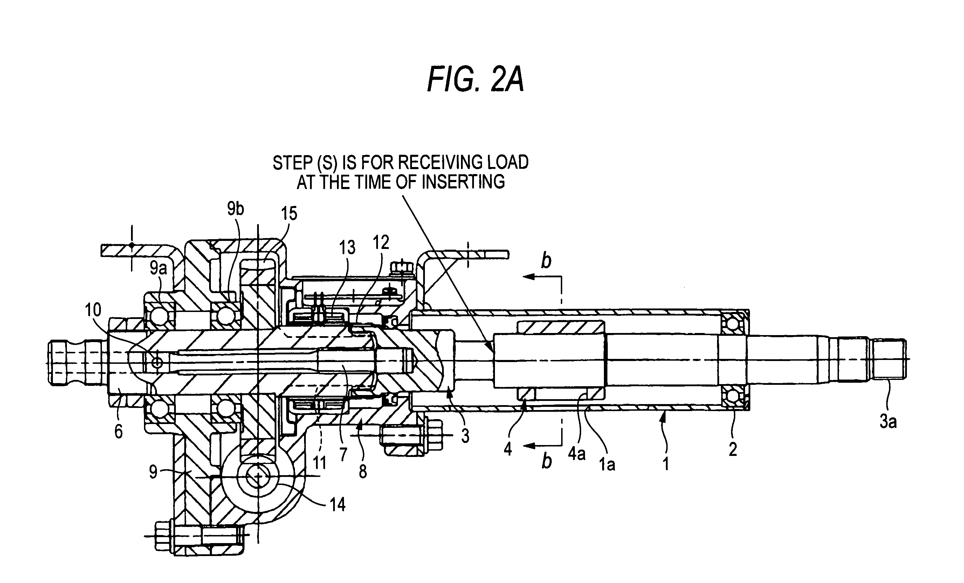

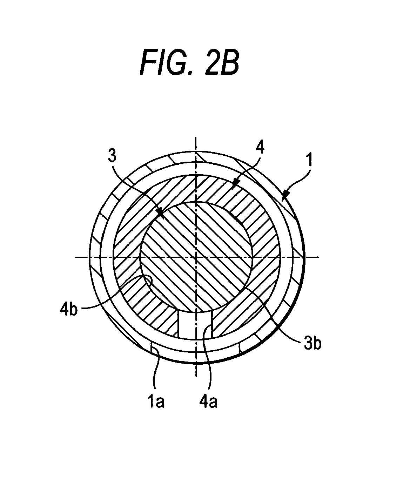

Fig. 2A is a longitudinal sectional view illustrating an electric power steering system according to a second embodiment of the invention and Fig. 2B is a cross-sectional view taken along Line b-b of Fig. 2A.

In this embodiment, as can be apparently seen from the figure, the basic structure is similar to that of the first embodiment and thus only differences are described.

In this embodiment, the key lock collar 4 is directly pressed to the input shaft 3 without using the slip ring.

As shown in Fig. 2B, in this embodiment, three fitting recesses 3b are formed in the circumferential direction in the steering shaft 3. On the other hand, three fitting protrusions 4b fitted into the fitting recesses 3b at the time of pressing are formed in the circumferential direction in the inner peripheral surface of the key lock collar 4. Accordingly, the pressing force is made insensitive to the cylinder size of the key lock collar 4 and it is difficult to allow the key lock collar 4 to rotate about the steering shaft 3.

In this embodiment, the input shaft 3 is fitted in advance to the gear housing 8 to form a sub assembly. That is, in the sub assembly, the worm wheel 15 is fitted to the output shaft 6, the torsion bar 7 or the input shaft 3 is coupled thereto, and the steering shaft (the input shaft 3 and the output shaft 6) is inserted to the inside of the sensor coil 13 having a small diameter.

The key lock collar 4 is fitted directly to the input shaft 3 of the sub assembly and thus the input shaft 3 and the key lock collar 4 cannot rotate relative to each other.

In this embodiment, the middle portion of the steering shaft (the input shaft 3 and the output shaft 6) is inserted to the small-diameter sensor coil 13 and the worm wheel 15 having a diameter larger than that of the coil 13 and the key lock collar 4 having a diameter larger than that of the coil 13 are fitted to both ends thereof, respectively. In this case, since the worm wheel 15 is fixed and the key lock collar 4 is fitted later to the steering shaft (the input shaft 3 and the output shaft 6) having been inserted to the sensor coil 13, it is possible to easily fit the key lock collar 4 having a diameter larger than the inner diameter of the sensor coil 13 without increasing the number of parts.

In this embodiment, the step S (diameter-changed portion) receiving the axial load at the time of pressing the key lock collar 4 is provided on the front side of the input shaft 3 so as to have a small diameter.

### (Third Embodiment)

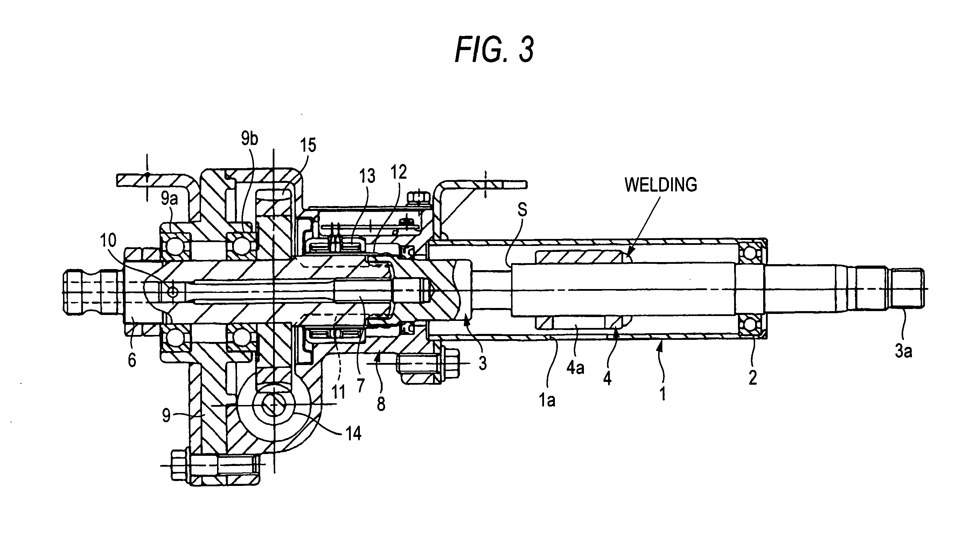

Fig. 3 is a longitudinal sectional view illustrating an electric power steering system according to a third embodiment of the invention.

In this embodiment, as can be apparently seen from the figure, the basic structure is similar to that of the first embodiment and thus only differences are described.

In this embodiment, the key lock collar 4 is directly pressed to the input shaft 3 without using the slip ring.

In this embodiment, the input shaft 3 is fitted in advance to the gear housing 8 to form-a sub assembly. That is, in the sub assembly, the worm wheel 15 is fitted to the output shaft 6, the torsion bar 7 or the input shaft 3 is coupled thereto, and the steering shaft (the input shaft 3 and the output shaft 6) is inserted to the inside of the sensor coil 13 having a small diameter.

The key lock collar 4 is fitted directly to the input shaft 3 of the sub assembly, is fixed thereto by welding, and thus the input shaft 3 and the key lock collar 4 cannot rotate relative to each other.

In this embodiment, the middle portion of the steering shaft (the input shaft 3 and the output shaft 6) is inserted to the small-diameter sensor coil 13 and the worm wheel 15 having a diameter larger than that of the coil 13 and the key lock collar 4 having a diameter larger than that of the coil 13 are fitted to both ends thereof, respectively. In this case, since the worm wheel 15 is fixed and the key lock collar 4 is fitted later to the steering shaft (the input shaft 3 and the output shaft 6) having been inserted to the sensor coil 13, it is possible to easily fit the key lock collar 4 having a diameter larger than the inner diameter of the sensor coil 13 without increasing the number of parts.

In this embodiment, the step S (diameter-changed portion) receiving the axial load at the time of pressing the key lock collar 4 is provided on the front side of the input shaft 3 so as to have a small diameter.

### (Fourth Embodiment)

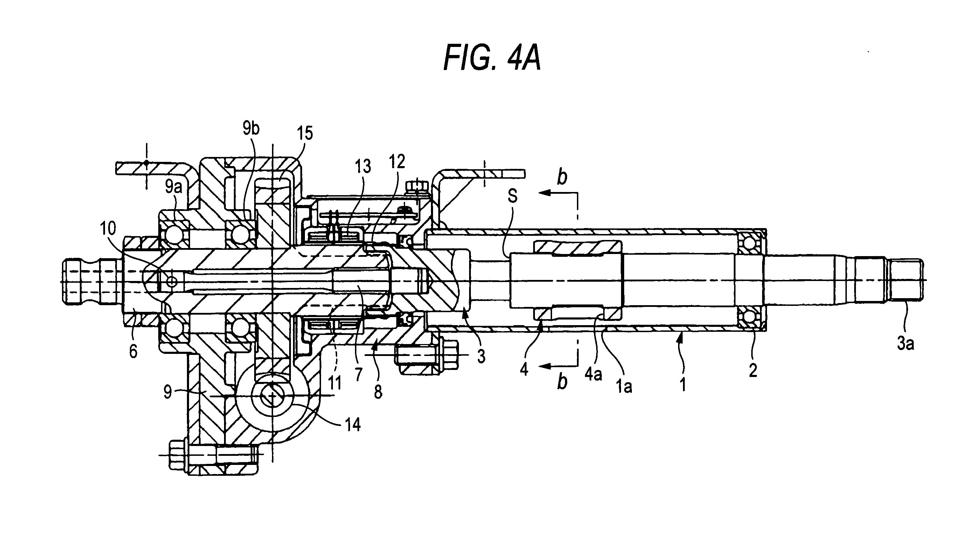

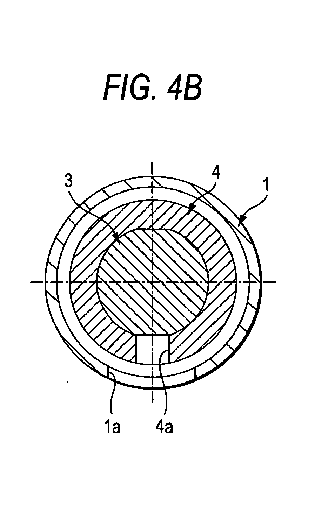

Fig. 4A is a longitudinal sectional view illustrating an electric power steering system according to a fourth embodiment of the invention and Fig. 4B is a cross-sectional view taken along Line b-b of Fig. 4A.

In this embodiment, as can be apparently seen from the figure, the basic structure is similar to that of the first embodiment and thus only differences are described.

In this embodiment, the key lock collar 4 is directly fixed to the input shaft 3 by applying fastening force, without using the slip ring.

In this embodiment, the input shaft 3 is fitted in advance to the gear housing 8 to form a sub assembly. That is, in the sub assembly, the worm wheel 15 is fitted to the output shaft 6, the torsion bar 7 or the input shaft 3 is coupled thereto, and the steering shaft (the input shaft 3 and the output shaft 6) is inserted to the inside of the sensor coil 13 having a small diameter.

The key lock collar 4 is fitted directly to the input shaft 3 of the sub assembly and the center portion of the key lock collar 4 is fixed to the input shaft 3 by applying the fastening force to the input shaft 3. Accordingly, the input shaft 3 and the key lock collar 4 cannot rotate relative to each other.

In this embodiment, the middle portion of the steering shaft (the input shaft 3 and the output shaft 6) is inserted to the small-diameter sensor coil 13 and the worm wheel 15 having a diameter larger than that of the coil 13 and the key lock collar 4 having a diameter larger than that of the coil 13 are fitted to both ends thereof, respectively. In this case, since the worm wheel 15 is fixed and the key lock collar 4 is fitted later to the steering shaft (the input shaft 3 and the output shaft 6) having been inserted to the sensor coil 13, it is possible to easily fit the key lock collar 4 having a diameter larger than the inner diameter of the sensor coil 13 without increasing the number of parts.

In this embodiment, the step S (diameter-changed portion) receiving the axial load of the key lock collar 4 is provided on the front side of the input shaft 3 so as to have a small diameter.

### (Fifth Embodiment)

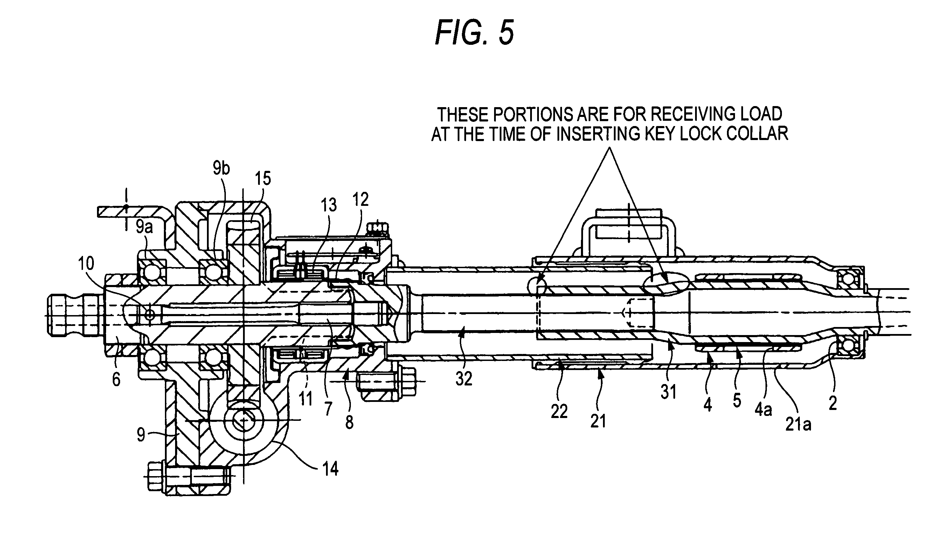

Fig. 5 is a longitudinal sectional view illustrating an electric power steering system according to a fifth embodiment of the invention.

In this embodiment, as can be apparently seen from the figure, the basic structure is similar to that of the first embodiment and thus only differences are described.

In this embodiment, the steering column having a collapse structure includes an upper column 21 on the rear side and a lower column 22 on the front side collapsibly fitted thereto. At the time of a secondary collision, the upper column 21 can collapse to the lower column 22 to move toward the front side of the vehicle.

The input shaft includes a hollow upper shaft 31 on the rear side and a solid lower shaft 32 on the front side slidably fitted thereto. At the time of a secondary collision, the upper shaft 31 can move to the front side relative to the lower shaft 32.

The key lock collar 4 of the antitheft device is pressed to a middle large-diameter portion of the hollow upper shaft 31 with the slip ring 5 interposed therebetween. When a driver pulls out a key, a shaft (not shown) advancing and retracting in a diameter direction from a hole 21a of the upper column 21 enters and engages with a hole 4a of the key lock collar 4. Accordingly, the input shaft including the upper shaft 31 and the lower shaft or the steering wheel (not shown) can be maintained in a non-rotating state.

When the electric power steering system having a collapse structure described above is assembled, the input shaft 31 and 32 is fitted in advance to the gear housing 8 to form a sub assembly. That is, in the sub assembly, the worm wheel 15 is fitted to the output shaft 6, the torsion bar 7 or the input shaft 3 is coupled thereto, and the steering shaft (the input shaft 31 and 32 and the output shaft 6) is inserted to the inside of the sensor coil 13 having a small diameter.

The key lock collar 4 is fitted to the input shaft 31 of the sub assembly with the slip ring 5 interposed therebetween by pressing or the like.

The steering columns 21 and 22 are coupled to the gear housing 8 of the sub assembly, thereby completing the electric power steering system.

In this embodiment, the middle portion of the steering shaft (the input shaft 31 and 32 and the output shaft 6) is inserted to the small-diameter sensor coil 13 and the worm wheel 15 having a diameter larger than that of the coil 13 and the key lock collar 4 having a diameter larger than that of the coil 13 are fitted to both ends thereof, respectively. In this case, since the worm wheel 15 is fixed and the key lock collar 4 is fitted later to the steering shaft (the input shaft 31 and 32 and the output shaft 6) having been inserted to the sensor coil 13, it is possible to easily fit the key lock collar 4 having a diameter larger than the inner diameter of the sensor coil 13 without increasing the number of parts.

In this embodiment, the axial load (since the fitting of the key lock collar 4 to the input shaft 31 and 32 is performed by axial pressing, the axial load is generated) generated at the time of fitting the key lock collar 4 to the input shaft 31 and 32 can be received by a tilted portion (portion surrounded with an ellipse in Fig. 5) of the hollow upper shaft 31 or the edge (portion surrounded with a circle in Fig. 5) thereof. Accordingly, extra load cannot be supplied to the sensor mechanism connected to the input shaft 31 and 32 or the collapse-structured portion including the upper shaft 31 and the lower shaft 32.

### (Sixth Embodiment)

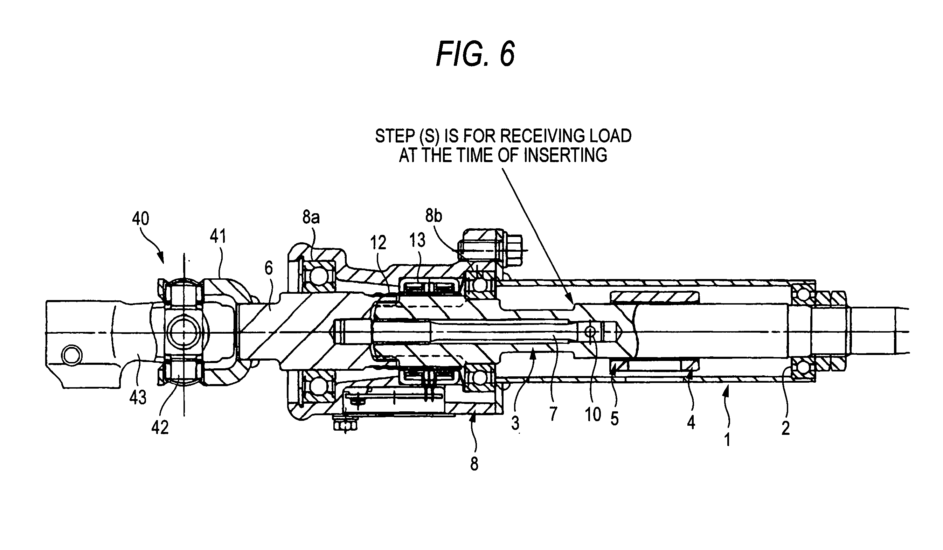

Fig. 6 is a longitudinal sectional view illustrating an electric power steering system according to a sixth embodiment of the invention.

In this embodiment, as can be apparently seen from the figure, the basic structure is similar to that of the first embodiment and thus only differences are described.

The steering system according to this embodiment has the torque sensor mechanism without having the power assist mechanism. In this case, the assembling method according to the present invention is applicable.

In this embodiment, the torque sensor mechanism is provided in the housing 8. That is, the detecting groove 11 of the torque sensor mechanism is formed on the rear portion of the output shaft 6 and the sleeve 12 of the torque-sensor mechanism is disposed on the outside in the diameter direction of the detecting groove 11. The sleeve 12 is fixed by fastening the rear end thereof to the front end of the input shaft 3. A coil 13 or a board is disposed on the outside in the diameter direction of the sleeve 12. The output shaft 6 is rotatably supported by a bearing 8a and the input shaft 3 is rotatably supported by a bearing 8b.

A universal joint 40 is connected to the output shaft 6 and a yoke of the universal joint 40 is integrally formed with the output shaft 6. The yoke 41 is connected to another yoke 43 through a cross shaft 42 and the yoke 43 is connected to the steering gear (not shown).

When the electric power steering system having a non-collapse structure described above is assembled, the input shaft 3 is fitted in advance to the gear housing 8 to form a sub assembly. That is, in the sub assembly, the output shaft 6 and the yoke 41 of the universal joint 40 are integrally formed each other, the torsion bar 7 or the input shaft 3 is coupled to the output shaft 6, and the steering shaft (the input shaft 3 and the output shaft 6) is inserted to the inside of the sensor coil 13 having a small diameter.

The key lock collar 4 is fitted to the input shaft 3 of the sub assembly with the slip ring 5 interposed therebetween by pressing or the like.

The steering column 1 is coupled to the gear housing 8 of the sub assembly, thereby completing the electric power steering system with the torque sensor mechanism.

In this embodiment, the middle portion of the steering shaft (the input shaft 3 and the output shaft 6) is inserted to the small-diameter sensor coil 13 and the yoke 41 of the universal joint 40 having a diameter larger than that of the coil 13 and the key lock collar 4 having a diameter larger than that of the coil 13 are fitted to both ends thereof, respectively. In this case, since the key lock collar 4 is fitted later to the steering shaft (the input shaft 3 and the output shaft 6) having been integrally formed with the yoke 41 of the universal joint 40 and having been inserted to the sensor coil 13, it is possible to easily fit the key lock collar 4 having a diameter larger than the inner diameter of the sensor coil 13 without increasing the number of parts.

In this embodiment, a step S (diameter-changed portion) having a small diameter is disposed on the front side of the input shaft 3. The step S can receive the axial load (since the fitting of the key lock collar 4 to the input shaft 3 is performed by axial pressing, the axial load is generated) generated at the time of fitting the key lock collar 4 to the input shaft 3. Accordingly, extra load cannot be supplied to the sensor mechanism connected to the input shaft 3.

### (Seventh Embodiment)

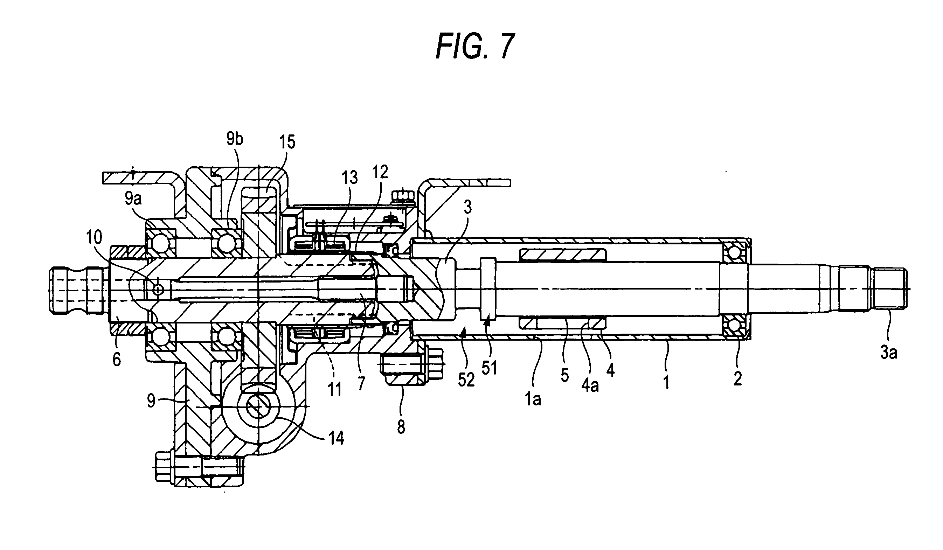

Fig. 7 is a longitudinal sectional view illustrating an electric power steering system according to a seventh embodiment of the invention.

In this embodiment, as can be apparently seen from the figure, the basic structure is similar to that of the first embodiment and thus only differences are described.

In this embodiment, a ring-shaped flange portion 51 is formed in the steering shaft 3 (input shaft) and a groove 52 is formed on the front side of the ring-shaped flange portion 51. The groove 52 serves as a jig mounting portion mounted with a jig used at the time of fitting the key lock collar 4.

In this embodiment, the ring-shaped flange portion 51 and the groove 52 can receive the axial load (since the fitting of the key lock collar 4 to the input shaft 3 is performed by axial pressing, the axial load is generated) generated at the time of fitting the key lock collar 4 to the steering wheel (not shown). Accordingly, extra load cannot be supplied to the sensor mechanism connected to the input shaft 3.

By using a steering wheel mounting screw 3a instead of the ring-shaped flange portion 51 and the groove 52, the axial load at the time of pressing may be attracted by the steering wheel (not shown).

In another method, the key lock collar 4 is pressed by allowing the key lock collar to pass through the input shaft 3 before passing through the slip ring 5 and moving the key lock collar 4 to the steering wheel (not shown) so as to cover the slip ring at a predetermined position.

In this case, the ring-shaped flange portion 51 and the groove 52 are not necessary and the pressing load may be received by an end surface of the steering wheel mounting screw 3a.

### (Eighth Embodiment)

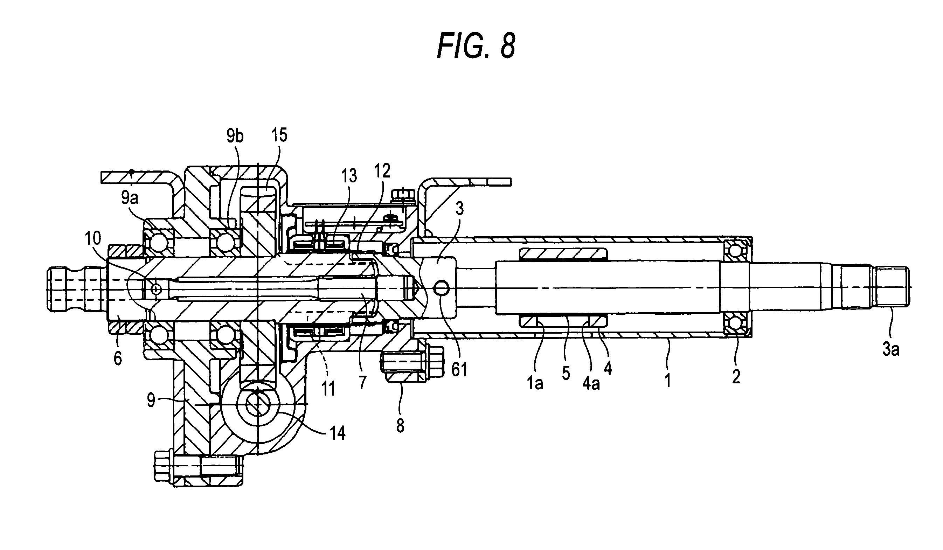

Fig. 8 is a longitudinal sectional view illustrating an electric power steering system according to an eighth embodiment of the invention.

In this embodiment, as can be apparently seen from the figure, the basic structure is similar to that of the first embodiment and thus only differences are described.

In this embodiment, a hole 61 is formed in the steering shaft 3 (input shaft). The hole 61 serves as a jig mounting portion mounted with a jig used at the time of fitting the key lock collar 4.

In this embodiment, the hole 61 can receive the axial load (since the fitting of the key lock collar 4 to the input shaft 3 is performed by axial pressing, the axial load is generated) generated at the time of fitting the key lock collar 4 to the steering wheel (not shown). Accordingly, extra load cannot be supplied to the sensor mechanism connected to the input shaft 3.

By using a steering wheel mounting screw 3a instead of the hole 61, the axial load at the time of pressing may be attracted by the steering wheel (not shown).

In another method, the key lock collar 4 is pressed by allowing the key lock collar to pass through the input shaft 3 before passing through the slip ring 5 and moving the key lock collar 4 to the steering wheel (not shown) so as to cover the slip ring at a predetermined position.

In this case, the hole 61 is not necessary and the pressing load may be received by an end surface of the steering wheel mounting screw 3a.

### (Ninth Embodiment)

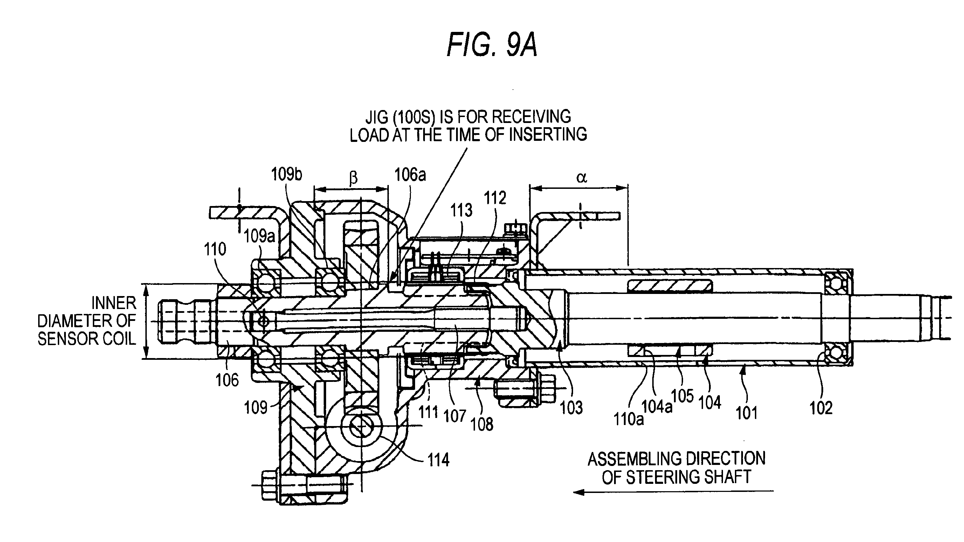

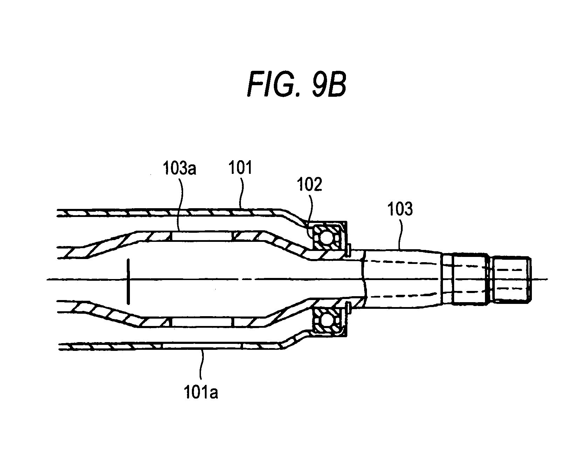

Fig. 9A is a longitudinal sectional view illustrating an electric power steering system according to a ninth embodiment of the invention and Fig. 9B is a longitudinal sectional view illustrating a part of the electric power steering system according to a reference example of the ninth embodiment.

As described above, an assembled electric power steering system according to this embodiment will be first described and a method of assembling the electric power steering system will be then described.

In the column-assisted electric power steering system shown in Fig. 9A, an input shaft 103 of a steering shaft is rotatably supported by a steering column 101 having a non-collapse structure with a bearing 102 interposed therebetween.

A key lock collar 104 of an antitheft device is pressed to a middle portion of the input shaft 103 with a slip ring 105 interposed therebetween. When a driver pulls out a key, a shaft (not shown) advancing and retracting in a diameter direction from a hole 101a of the steering column 101 enters and engages with a hole 104a of the key lock collar 104. Accordingly, the input shaft 103 or the steering wheel (not shown) can be maintained in a non-rotating state.

When torque greater than a predetermined value is applied to the key lock collar 104, the slip ring 105 permits the relative rotation about the input shaft 103.

An output shaft 106 is connected to the front portion of the input shaft 103 through a torsion bar 107 described later. The output shaft 106 is inserted to a gear housing 108 or a cover 109 and a steering gear (not shown) is connected to the front portion of the output shaft through a universal joint (not shown). The output shaft 106 is rotatably supported by bearings 109a and 109b of the cover 109.

A base end of the torsion bar 107 is pressed and fixed to the front portion of the input shaft 103. The torsion bar 107 extends through the insider of the output shaft 106 which is hollow and the end thereof is fixed to the end of the output shaft 106 by a fixing pin 110.

A detecting groove 111 of a torque sensor mechanism is formed on the rear portion of the output shaft 106. A sleeve 112 of the torque sensor mechanism is disposed on the outside in the diameter direction of the detecting groove 111. The sleeve 112 is fixed by fastening the rear end thereof to the front end of the input shaft 103. A coil 113 or a board is disposed on the outside in the diameter direction of the sleeve 112.

A worm wheel 115 engaging with a worm 114 which is a driving shaft of an electric motor (not shown) is fitted and fixed to the output shaft 106. The worm wheel 115 is pressed and fitted to a large-diameter portion 106a of the output shaft 106, as described later, and is fixed so as not to be relatively rotatable.

As described later, a step 100S (diameter-changed portion) with a large diameter is provided on the rear side of the worm wheel 115 of the output shaft 106 and on the front side of the sensor coil 113.

Accordingly, steering force generated by allowing a driver to steer a steering wheel (not shown) is supplied to a rudder wheel not shown via the input shaft 103, the torsion bar 107, the output shaft 106, and a rack-and-pinion steering gear. The rotary power of the electric motor is supplied to the output shaft 106 through the work 114 and the worm wheel 115 and appropriate auxiliary steering torque is applied to the output shaft 106 by appropriately controlling the rotary power and the rotation direction of the electric motor.

When the electric power steering system having a non-collapse structure described above is assembled, the key lock collar 1044 is fitted to the input shaft 103 of the steering shaft with the slip ring 105 interposed therebetween by pressing or the like.

The steering shaft (input shaft 103 and output shaft 106) fitted with the key lock collar 104 is inserted into the housing 108 in the arrow direction shown in the figure and is inserted to the inside of the sensor coil 113 of the sensor mechanism formed integrally with the housing 108.

Thereafter, the worm wheel 115 is pressed and fitted to the large-diameter portion 106a of the output shaft 106 of the steering shaft and is fixed so as not to be relatively rotatable.

Finally, the steering column 101 and the cover 109 are coupled to both sides of the housing 108, thereby completing the electric power steering system.

In this embodiment, the middle portion of the steering shaft (the input shaft 103 and the output shaft 106) is inserted to the small-diameter sensor coil 113 and the worm wheel 115 having a diameter larger than that of the coil 113 and the key lock collar 104 having a diameter larger than that of the coil 113 are fitted to both ends thereof, respectively. In this case, since the worm wheel 115 is fixed and the key lock collar 104 is fitted later to the steering shaft (the input shaft 103 and the output shaft 106) having been inserted to the sensor coil 113, it is possible to easily fit the key lock collar 104 having a diameter larger than the inner diameter of the sensor coil 113 without increasing the number of parts. In addition, it is possible to easily fit the worm wheel 115 and to freely set the diameter of the key lock collar 104.

In this embodiment, a step 100S (diameter-changed portion) with a large diameter is provided on the rear side of the worm wheel 115 of the output shaft 106 and on the front side of the sensor coil 113. A jig groove 117 is formed on the rear side of the step 100S.

At the time of fitting the worm wheel 115 to the output shaft 106, the worm wheel is pressed in the axis direction and thus an axial load is generated. At this time, the step 100S (jig groove 117) can receive the axial load. Accordingly, extra load cannot be supplied to the sensor mechanism connected to the output shaft 106. The axial load at the time of pressing may be received by an output shaft fixing screw instead of the step 100S (jig groove 117) and the axial load at the time of pressing may be received by a partial plane portion formed on the front side of the sensor coil 113.

In the reference example shown in Fig. 9B, the input shaft 103 of the steering shaft is hollow and the worm wheel 115 is fitted later as described above. Accordingly, by forming the hollow input shaft 103 with a large diameter and forming a lock hole 103a in the large-diameter portion, instead of using the key lock collar 104, the key lock collar may be formed integrally.

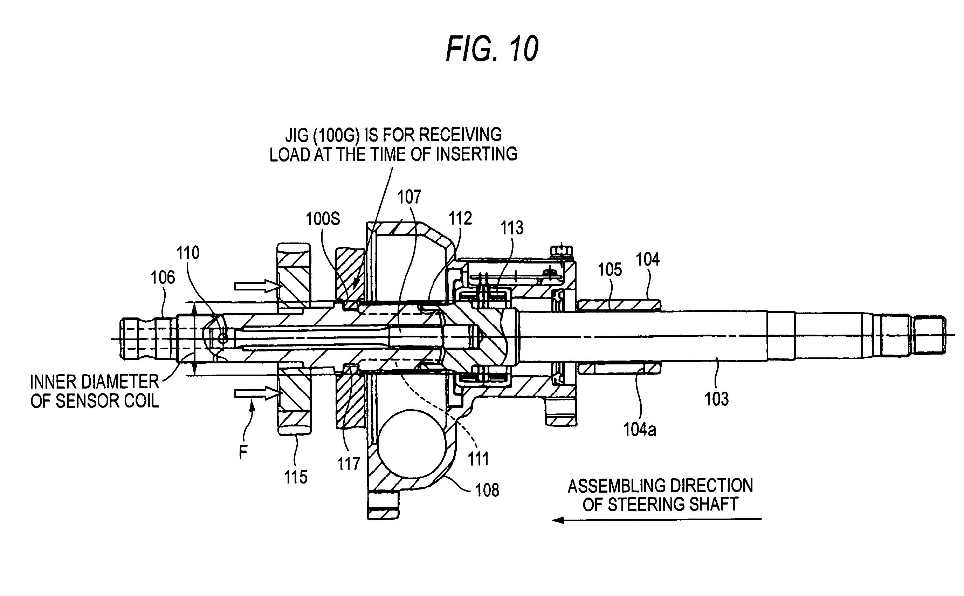

Fig. 10 is a longitudinal sectional view illustrating the electric power steering system according to the ninth embodiment of the invention, which shows a process of fixing a worm wheel and a state where a jig is fitted.

As shown in Fig. 9, reference sign "α" denotes a distance between the rear end of the housing 108 and the front end of the key lock collar 104 and reference sign "β" is a distance between the front end of the housing 108 and the front surface of the jig groove 117 of the output shaft 106, "α>β" is set.

As a result, a difference expressed by "α-β" serves as a gap at the time of fitting a jig 100G receiving the load of the input shaft 103 at the time of pressing the worm wheel 115.

That is, as shown in Fig. 10, the input shaft 103 and the output shaft 4 move to the front side relative to the housing 108 so as to be "α=0", at the time of pressing the worm wheel 115.

When the front surface of the jig groove 117 of the output shaft 106 moves to the front side by "α", it can be exposed from the front end of the housing 108 due to the relation of "α>β."

Therefore, as shown in Fig. 10, the jig 100G can be fitted into the gap of "α-β."

At the time of pressing the worm wheel 115, as shown in Fig. 10, the jig 100G is fitted to the jig groove 117 and the backward load F is applied to the worm wheel 115 in this state.

As a result, the worm wheel 115 is pressed and fitted to the large-diameter portion 106a of the output shaft 106 and is fixed in a relatively non-rotatable state.

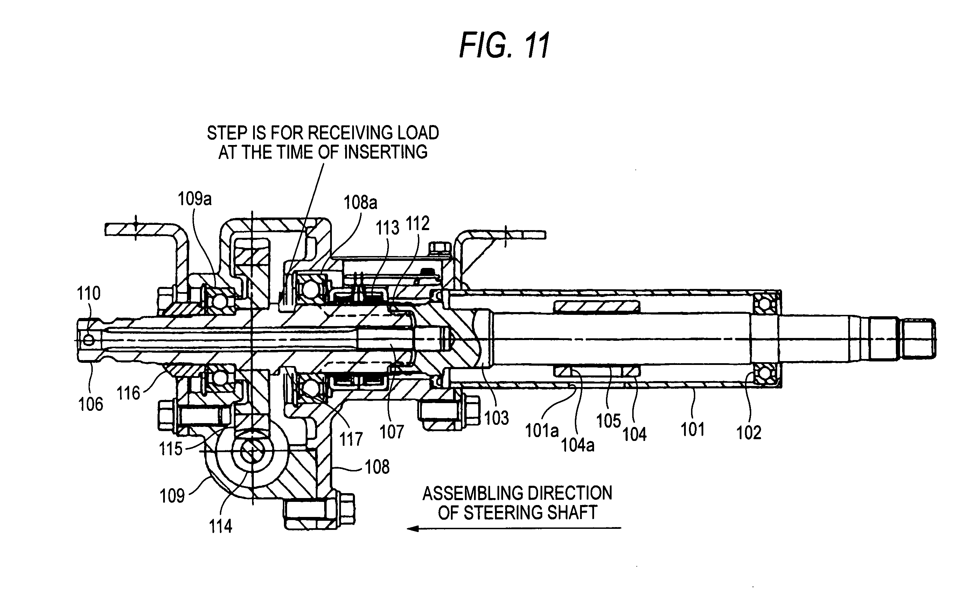

Fig. 11 is a longitudinal sectional view illustrating an electric power steering system according to a modified example of the ninth embodiment of the invention.

In this modified example, as shown in Fig. 11, the housing 108 and the cover 109 are divided on the rear side, unlike the ninth embodiment. As a result, the worm gear 114 and the worm wheel 115 are housed in the cover 109 on the front side. The bearing 108a on the rear side is interposed between the housing 108 and the output shaft 106. The worm wheel 115 is fitted to the output shaft 106 of the steering shaft to strongly fasten the nut 116 through the bearing 109a and it is fixed in a relatively non-rotatable state.

### (Tenth Embodiment)

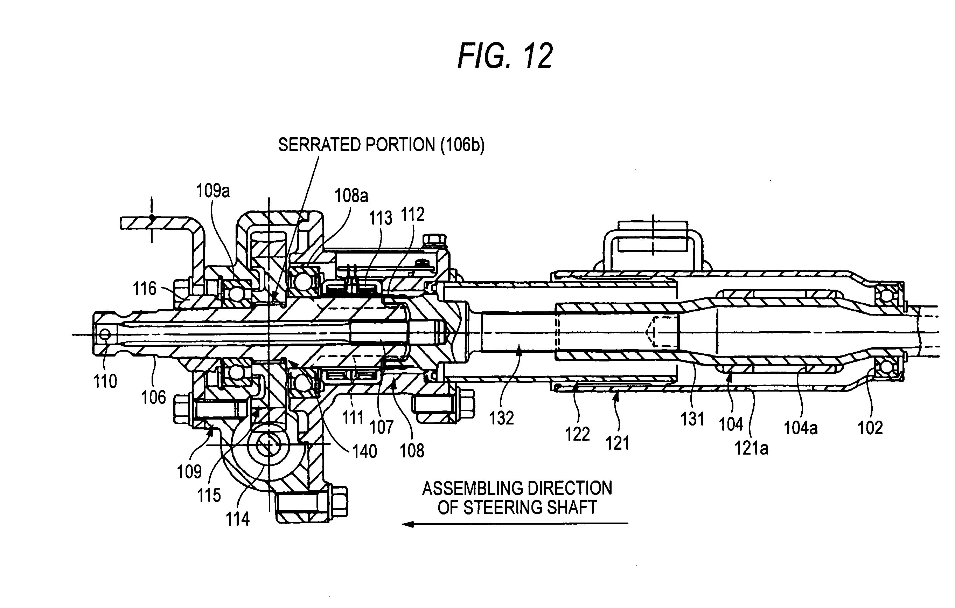

Fig. 12 is a longitudinal sectional view illustrating an electric power steering system according to a tenth embodiment of the invention.

In this embodiment, as can be apparently seen from the figure, the basic structure is similar to that of the ninth embodiment and thus only differences are described.

In this embodiment, the steering column having a collapse structure includes an upper column 121 on the rear side and a lower column 122 on the front side collapsibly fitted thereto. At the time of a secondary collision, the upper column 121 can collapse to the lower column 122 to move toward the front side of the vehicle.

The input shaft includes a hollow upper shaft 131 on the rear side and a solid lower shaft 132 on the front side slidably fitted thereto. At the time of a secondary collision, the upper shaft 131 can move to the front side relative to the lower shaft 132.

The key lock collar 104 of the antitheft device is welded to a middle large-diameter portion of the hollow upper shaft 131. When a driver pulls out a key, a shaft (not shown) advancing and retracting in a diameter direction from a hole 121a of the upper column 121 enters and engages with a hole 104a of the key lock collar 104. Accordingly, the input shaft 131 and 132 or the steering wheel (not shown) can be maintained in a non-rotating state.

The output shaft 106 is supported rotatably by the bearing 108a of the housing 108 and the bearing 109a of the cover 109.

In this embodiment, a serrated portion 106b is formed in the output shaft 106 so as to fit the worm wheel 115 in a serrated manner.

At the time of assembling the electric power steering system, first, the key lock collar 104 is fitted to the upper shaft 131 by welding or the like.

The steering shaft (input shaft 131 and 132 and output shaft 106) fitted with the key lock collar 104 is inserted into the housing 108 in the shown arrow direction and is inserted to the inside the sensor coil 113 of the sensor mechanism formed integrally with the housing 108.

Thereafter, the worm wheel 115 is fitted into the serrated portion 106b of the output shaft 106 of the steering shaft to strongly fasten the nut 116 through the bearing 109a and is fixed in a relatively non-rotatable state.

Finally, the steering columns 121 and 122 and the cover 109 are coupled to both sides of the housing 108, thereby completing the electric power steering system.

In this embodiment, the middle portion of the steering shaft (the input shaft 131 and 132 and the output shaft 106) is inserted to the small-diameter sensor coil 113 and the worm wheel 115 having a diameter larger than that of the coil 113 and the key lock collar 104 having a diameter larger than that of the coil 113 are fitted to both ends thereof, respectively. In this case, since the worm wheel 115 is fixed and the key lock collar 104 is fitted later to the steering shaft (the input shaft 131 and 132 and the output shaft 106) having been inserted to the sensor coil 113, it is possible to easily fit the key lock collar 104 having a diameter larger than the inner diameter of the sensor coil 113 without increasing the number of parts. In addition, it is possible to easily fit the worm wheel 115 and to freely set the diameter of the key lock collar 104.

Since the worm wheel 115 is fitted to the output shaft 106 in a serrated manner and the axial load is not generated at the time of assembly, the step 100S (diameter-changed portion) as in the ninth embodiment is not necessarily formed in the output shaft 106.

An O ring 140 is provided on the rear side of the serrated portion 106b of the output shaft 106. Accordingly, by interposing the O ring 140 between the output shaft 106 and the worm wheel 115, the looseness between the output shaft 106 and the worm wheel 115.

### (Eleventh Embodiment)

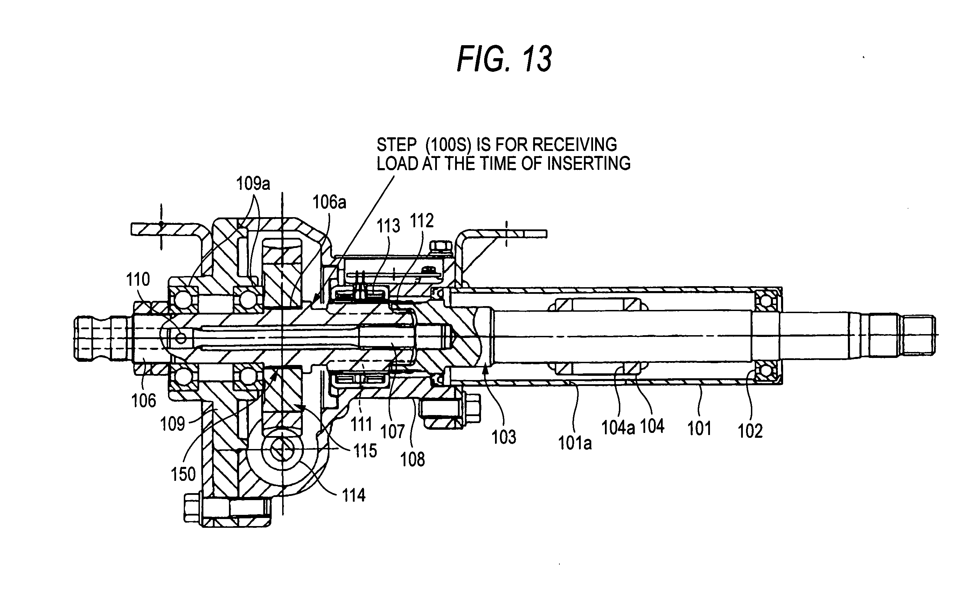

Fig. 13 is a longitudinal sectional view illustrating an electric power steering system according to an eleventh embodiment of the invention.

In this embodiment, as can be apparently seen from the figure, the basic structure is similar to that of the ninth embodiment and thus only differences are described.

In this embodiment, the worm wheel 115 is fitted to the large-diameter portion 106a of the output shaft 106 with a slip ring 150 serving as a torque limiter therebetween.

The worm wheel 115 and the output shaft 106 do not rotate relatively due to the slip ring 150 when the auxiliary steering torque is supplied through the worm wheel 115 from an electric motor (not shown). However, when an impact load is applied from the steering gear side due to the collision of a vehicle wheel with an edge stone or the like, the relative rotation of the worm wheel 115 and the output shaft 106 is permitted, thereby protecting the worm wheel 115.

At the time of assembling the electric power steering system, first, the key lock collar 104 is fitted to the input shaft 103 of the steering shaft by welding or the like. The steering shaft (input shaft 103 and output shaft 106) is inserted into the housing 108 in the shown arrow direction and is inserted to the inside the sensor coil 113 of the sensor mechanism formed integrally with the housing 108.

Thereafter, the worm wheel 115 is pressed and fitted into the large-diameter portion 106a of the output shaft 106 of the steering shaft through the slip ring 150 and is fixed in a relatively non-rotatable state. Finally, the steering column 101 and the cover 109 are coupled to both sides of the housing 108, thereby completing the electric power steering system.

In this embodiment, the middle portion of the steering shaft (the input shaft 103 and the output shaft 106) is inserted to the small-diameter sensor coil 113 and the worm wheel 115 having a diameter larger than that of the coil 113 and the key lock collar 104 having a diameter larger than that of the coil 113 are fitted to both ends thereof, respectively. In this case, since the worm wheel 115 is fixed and the key lock collar 104 is fitted later to the steering shaft (the input shaft 103 and the output shaft 106) having been inserted to the sensor coil 113, it is possible to easily fit the key lock collar 104 having a diameter larger than the inner diameter of the sensor coil 113 without increasing the number of parts. In addition, it is possible to easily fit the worm wheel 115 and to freely set the diameter of the key lock collar 104.

In this embodiment, the step 100S (diameter-changed portion) with a large diameter is provided on the rear side of the worm wheel 115 of the output shaft 106 and on the front side of the sensor coil 113. The step 100S can receive the axial load generated (the fitting of the worm wheel 115 to the output shaft 106 causes axial pressing) at the time of fitting the worm wheel 115 to the output shaft 106. Accordingly, extra load cannot be supplied to the sensor mechanism connected to the output shaft 106. The axial load at the time of pressing may be received by an output shaft fixing screw instead of the step 100S and the axial load at the time of pressing may be received by a partial plane portion formed on the front side of the sensor coil 113.

### (Twelfth Embodiment)

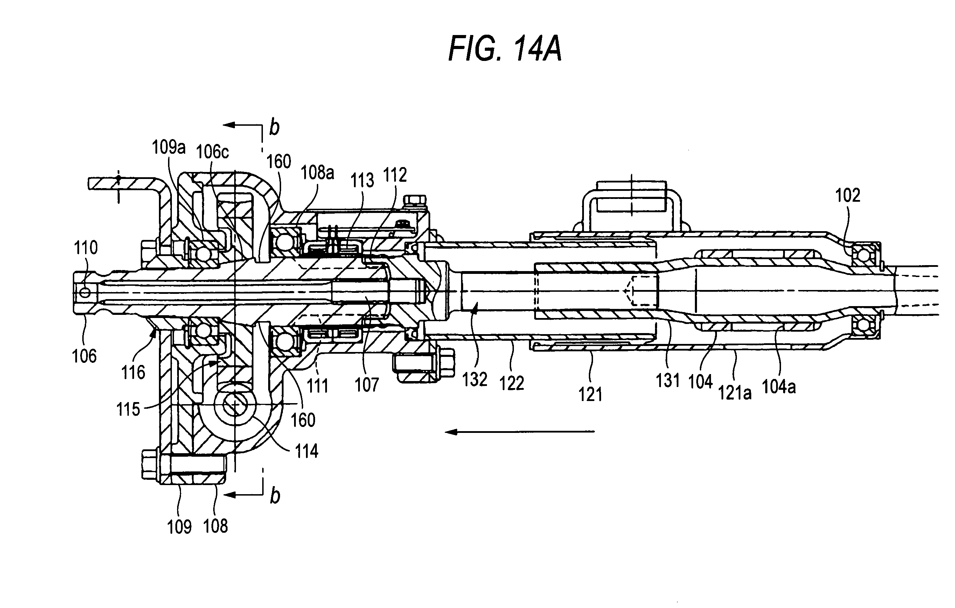

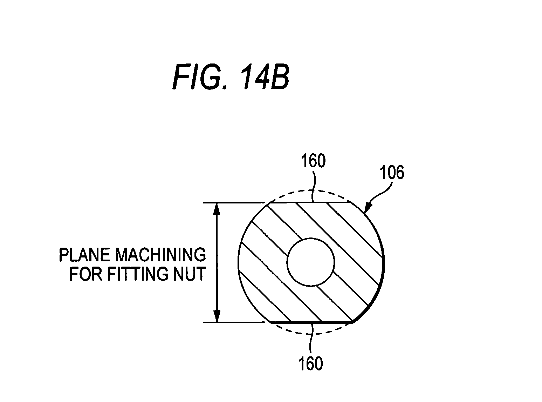

Fig. 14A is a longitudinal sectional view illustrating an electric power steering system according to a twelfth embodiment of the invention and Fig. 14B is a cross-sectional view taken along Line b-b of Fig. 14A.

In this embodiment, as can be apparently seen from the figure, the basic structure is similar to that of the ninth or tenth embodiment and thus only differences are described.

In this embodiment, the steering column having a collapse structure includes an upper column 121 on the rear side and a lower column 122 on the front side collapsibly fitted thereto. At the time of a secondary collision, the upper column 121 can collapse to the lower column 122 to move toward the front side of the vehicle.

The input shaft includes a hollow upper shaft 131 on the rear side and a solid lower shaft 132 on the front side slidably fitted thereto. At the time of a secondary collision, the upper shaft 131 can move to the front side relative to the lower shaft 132.

The key lock collar 104 of the antitheft device is pressed to a middle large-diameter portion of the hollow upper shaft 131. When a driver pulls out a key, a shaft (not shown) advancing and retracting in a diameter direction from a hole 121a of the upper column 121 enters and engages with a hole 104a of the key lock collar 104. Accordingly, the input shaft 131 and 132 or the steering wheel (not shown) can be maintained in a non-rotating state.

The output shaft 106 is supported rotatably by the bearing 108a of the housing 108 and the bearing 109a of the cover 109.

In this embodiment, a tapered portion 106c is formed in the output shaft 106 so as to fit the worm wheel 115 in a serrated manner. The frictional force between both due to the tapered fitting does not allow the output shaft 106 and the worm wheel 115 to relatively rotate.

In this case, as shown in Fig. 14B, a pair of partial plane portions 160 and 60 is formed on the rear side of the tapered portion of the output shaft 106. By maintaining a pair of partial plane portions 160 and 60, excessive torsion torque is not applied to the sensor mechanism, thereby strongly fastening the nut 116.

At the time of assembling the electric power steering system, first, the key lock collar 104 is fitted to the upper shaft 131 by welding or the like.

The steering shaft (input shaft 131 and 132 and output shaft 106) fitted with the key lock collar 104 is inserted into the housing 108 in the shown arrow direction and is inserted to the inside the sensor coil 113 of the sensor mechanism formed integrally with the housing 108.

Thereafter, the worm wheel 115 is fitted into the tapered portion 106c of the output shaft 106 of the steering shaft to strongly fasten the nut 116 through the bearing 109a and is fixed in a relatively non-rotatable state. At this time, as described above, by maintaining a pair of partial plane portions 160 and 60, excessive torsion torque is not applied to the sensor mechanism, thereby strongly fastening the nut 116.

Finally, the steering columns 121 and 122 and the cover 109 are coupled to both sides of the housing 108, thereby completing the electric power steering system.

In this embodiment, the middle portion of the steering shaft (the input shaft 131 and 132 and the output shaft 106) is inserted to the small-diameter sensor coil 113 and the worm wheel 115 having a diameter larger than that of the coil 113 and the key lock collar 104 having a diameter larger than that of the coil 113 are fitted to both ends thereof, respectively. In this case, since the worm wheel 115 is fixed and the key lock collar 104 is fitted later to the steering shaft (the input shaft 131 and 132 and the output shaft 106) having been inserted to the sensor coil 113, it is possible to easily fit the key lock collar 104 having a diameter larger than the inner diameter of the sensor coil 113 without increasing the number of parts. In addition, it is possible to easily fit the worm wheel 115 and to freely set the diameter of the key lock collar 104.

### (Thirteenth Embodiment)

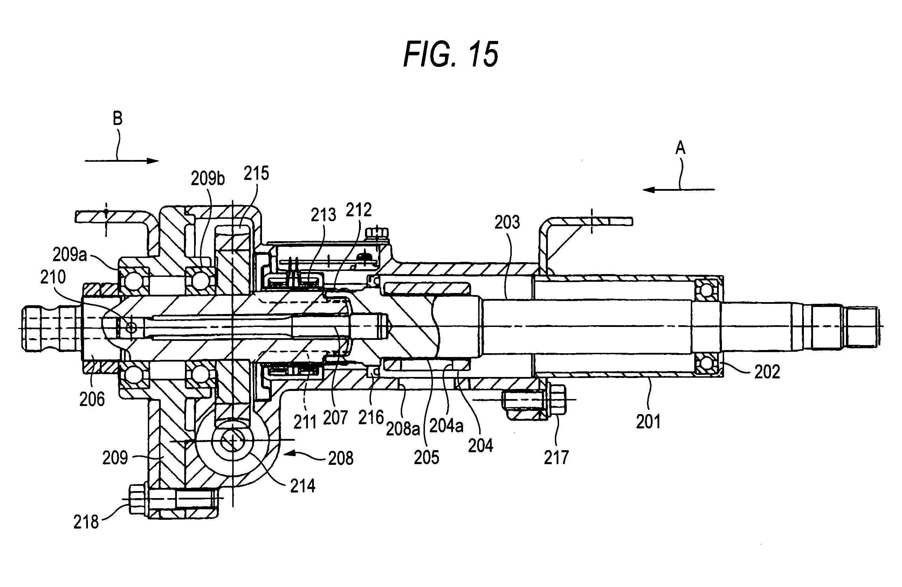

Fig. 15 is a longitudinal sectional view illustrating an electric power steering system according to a thirteenth embodiment of the invention.

As described above, an assembled electric power steering system according to this embodiment will be first described and a method of assembling the electric power steering system will be then described.

In the column-assisted electric power steering system shown in Fig. 15, an input shaft 203 of a steering shaft is rotatably supported by a steering column 201 having a non-collapse structure with a bearing 202 interposed therebetween.

A key lock collar 204 of an antitheft device is pressed to a middle portion of the input shaft 203 with a slip ring 205 interposed therebetween. When a driver pulls out a key, a key bolt (not shown) advancing and retracting in a diameter direction from a hole 208a of gear housing 208 enters and engages with a hole 204a of the key lock collar 204. Accordingly, the input shaft 203 or the steering wheel (not shown) can be maintained in a non-rotating state.

When torque greater than a predetermined value is applied to the key lock collar 204, the slip ring 205 permits the relative rotation about the input shaft 203.

An output shaft 206 is connected to the front portion of the input shaft 203 through a torsion bar 207 described later. The output shaft 206 is inserted to a gear housing 208 or a cover 209 and a steering gear (not shown) is connected to the front portion of the output shaft through a universal joint (not shown). The output shaft 206 is rotatably supported by bearings 209a and 209b of the cover.

A base end of the torsion bar 207 is pressed and fixed to the front portion of the input shaft 203. The torsion bar 207 extends through the insider of the output shaft 206 which is hollow and the end thereof is fixed to the end of the output shaft 206 by a fixing pin 210.

A detecting groove 211 of a torque sensor mechanism is formed on the rear portion of the output shaft 206. A sleeve 212 of the torque sensor mechanism is disposed on the outside in the diameter direction of the detecting groove 211. The sleeve 212 is fixed by fastening the rear end thereof to the front end of the input shaft 203. A coil 213 or a board is disposed on the outside in the diameter direction of the sleeve 212.

A worm wheel 115 engaging with a worm 214 which is a driving shaft of an electric motor (not shown) is fitted and fixed to the output shaft 206.

Accordingly, steering force generated by allowing a driver to steer a steering wheel (not shown) is supplied to a rudder wheel not shown via the input shaft 203, the torsion bar 207, the output shaft 206, and a rack-and-pinion steering gear. The rotary power of the electric motor is supplied to the output shaft 206 through the work 214 and the worm wheel 215 and appropriate auxiliary steering torque is applied to the output shaft 206 by appropriately controlling the rotary power and the rotation direction of the electric motor.

Reference numeral 216 denotes a seal member. In this embodiment, in order to prevent refuse, etc. from entering the torque sensor mechanism, the seal member 216 is disposed between the key lock collar 204 and the torque sensor mechanism. This is because refuse, etc. hardly enters the torque sensor mechanism when the torque sensor mechanism and the seal member 216 are close to each other (no additional component exist therebetween). When the seal member 216 is fixed to the gear housing 208 and slides over the input shaft 203, the inner diameter of the seal member 216 is larger than that of the sleeve 212 and the outer diameter of the input shaft 203 sliding over the seal member 216 is larger than the diameter of the sleeve 212, in consideration of the mounting direction of the input shaft 203 to be described later. When the seal member 216 is fixed to the input shaft 203 and slides over the gear housing 208, it is preferably smaller than the diameter of the sleeve 212.

Reference numeral 217 denotes a bolt for fixing the steering column 201 and reference numeral 218 denotes a bolt for fixing the cover 209.

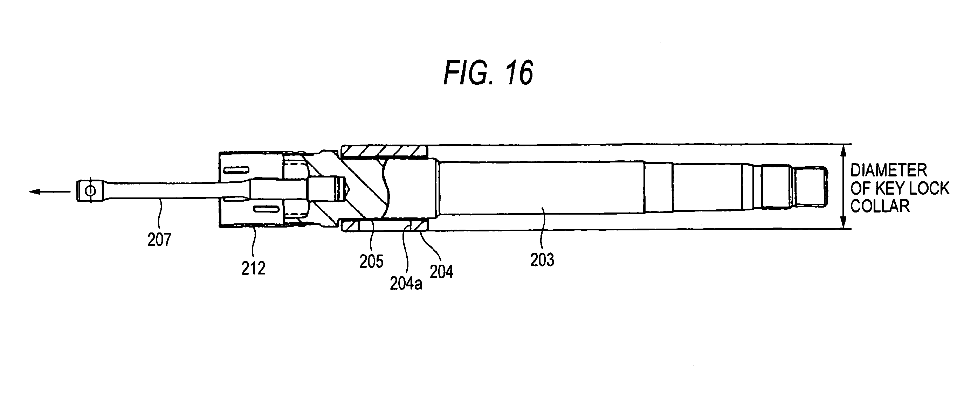

Fig. 16 is an assembly diagram of the electric power steering system shown in Fig. 15 and is a longitudinal sectional view of the input shaft.

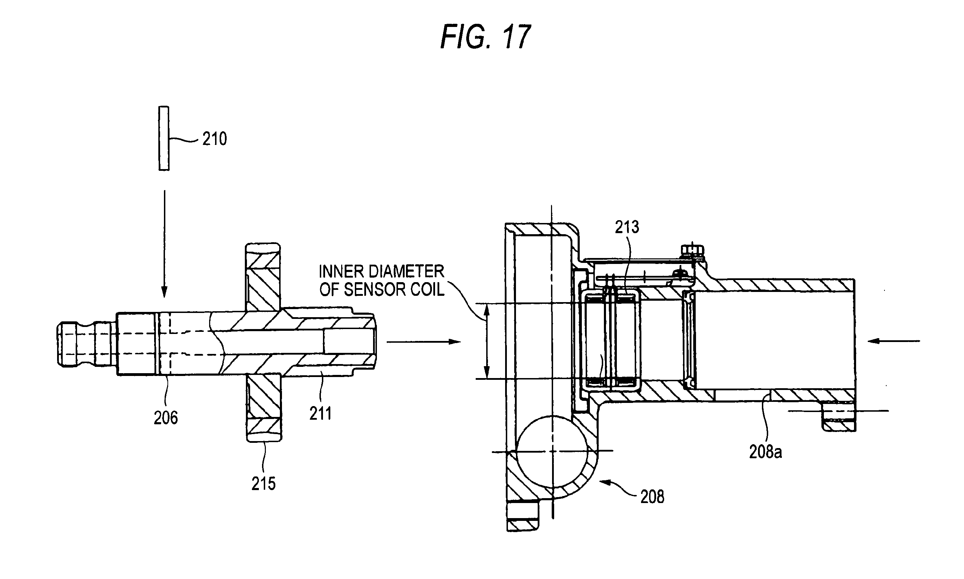

Fig. 17 is an assembly diagram of the electric power steering system shown in Fig. 15 and is a longitudinal sectional view of the output shaft.

In Figs. 16 and 17, the cover 209, the steering column 201, and the like are not shown.

Hereinafter, a method of assembling the electric power steering system having the non-collapse structure described above will be described. As shown in Figs. 16 and 17, the outer diameter of the key lock collar 204 is larger than the inner diameter of the coil 213 of the torque sensor mechanism.

First, as shown in Fig. 16, the key lock collar 204 of the antitheft device is pressed in advance to the input shaft 203 with the slip ring 205 therebetween. The base end of the torsion bar 207 is pressed in advance to the front side of the input shaft 203. The base end of the torsion bar 207 may be fixed with a pin in advance. The sleeve 212 is fixed in advance by allowing the rear end thereof to fasten the front end of the input shaft 203. The torsion bar 207 may be pressed and fixed in advance to the output shaft 206.

On the other hand, as shown in Fig. 17, a mounting portion of the antitheft device not shown is formed integrally with the gear housing 208. The worm wheel 215 is fitted in advance to the output shaft 206.

Next, as shown in Figs. 16 and 17, the input shaft 203 fitted with the key lock collar 204 is allowed to pass through the inside of the coil 213 of the gear housing 208 to the front side from the rear side (the direction of arrow A in Fig. 15). On the other hand, the output shaft 206 fitted with the worm wheel 215 is allowed to pass through the inside of the coil 213 of the gear housing 208 to the rear side from the front side (the direction of arrow B in Fig. 15).

Accordingly, the front end of the input shaft 203 is coupled to the rear end of the output shaft 206 on the inner diameter side, with the coil 213 of the sensor mechanism therebetween. At this time, the torsion bar 207 is inserted to the axial hole of the output shaft 206.

Thereafter, the fixing pin 210 is pressed to and inserted to a common hole of the output shaft 206 and the torsion bar 207, thereby fixing the output shaft 206 and the torsion bar 207. The common hole is opened in advance for the purpose of excellent mounting workability, but may be opened right before the pressing.

The periphery of the steering shaft of EPS is completed by coupling the cover 209 and the steering column 201 to each other with the bolts 217 and 218. By covering the fixing pin 210 with the inner wheel of the bearings 209a and 209b of the cover 209, the departing of the fixing pin 210 can be also prevented.

According to this embodiment described above, even when the input shaft 203 and the output shaft 206 have the key lock collar 204 on the rear side and the worm wheel 215 on the front side, both of which have a diameter larger than the inner diameter of the sensor coil 213 therebetween, it is possible to easily fit the key lock collar 204 having a diameter larger than the inner diameter of the sensor coil 213 without increasing the number of parts.

In the above-mentioned assembling method according to this embodiment, the key lock collar 204 can be disposed inside the gear housing 208 made of aluminum formed integrally with the sensor housing.

In a fitting method of fitting both shafts to the sensor unit and then fitting the key lock collar as a fitting method of the key lock collar having a diameter larger than the inner diameter of the sensor coil, it is difficult to press the key lock collar to the input shaft, to fix the key lock collar by welding, or to fix the key lock collar by fastening, in the gear housing made of aluminum.

In the fitting method of the key lock collar having a diameter larger than the inner diameter of the sensor coil, the structure is simplified and compact in comparison with the fitting method of fitting the worm wheel after fitting both shafts to the sensor unit, because a press receiving portion need not be formed. It is possible to make the sensor unit close to the key lock collar.

In comparison with Patent Documents 1 to 3, it is not necessary to form the input shaft out of a plurality of parts, thereby suppressing production cost.

### (First Modified Example of Thirteenth Embodiment)

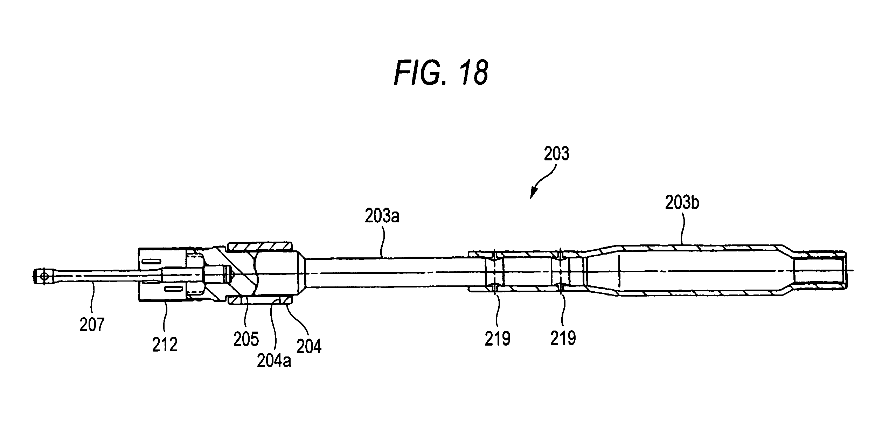

Fig. 18 is a longitudinal sectional view of the input shaft according to a first modified example of the thirteenth embodiment. This modified example has the same basic structure as the thirteenth embodiment described above and only differences will be described.

The input shaft 203 is divided into a front shaft 203a and a rear shaft 203b and the portion indicated by reference numeral 219 has a collapse structure by injection.

In this modified example, the key lock collar 204 having a diameter larger than the inner diameter of the coil 213 may be provided in the front shaft 203a coupled to the torsion bar 207 and the key lock collar 204 may be disposed close to the sensor coil 213. It is naturally possible to provide the key lock collar 204 or the lock groove in the rear shaft 203b.

### (Second Modified Example of Thirteenth Embodiment)

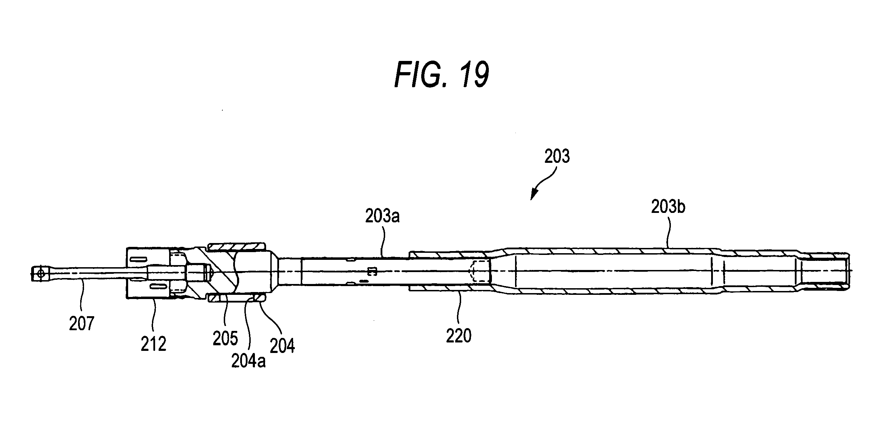

Fig. 19 is a longitudinal sectional view of the input shaft according to a second modified example of the thirteenth embodiment. This modified example has the same basic structure as the thirteenth embodiment described above and only differences will be described.

The input shaft 203 is divided into a front shaft 203a and a rear shaft 203b and the collapse structure is formed by elliptical fitting in the coupling portion 220 between both shafts 203a and 203b.

In this modified example, the key lock collar 204 having a diameter larger than the inner diameter of the coil 213 may be provided in the front shaft 203a coupled to the torsion bar 207 and the key lock collar 204 may be disposed close to the sensor coil 213. It is naturally possible to provide the key lock collar 204 or the lock groove in the rear shaft 203b.

### (Third Modified Example of Thirteenth Embodiment)

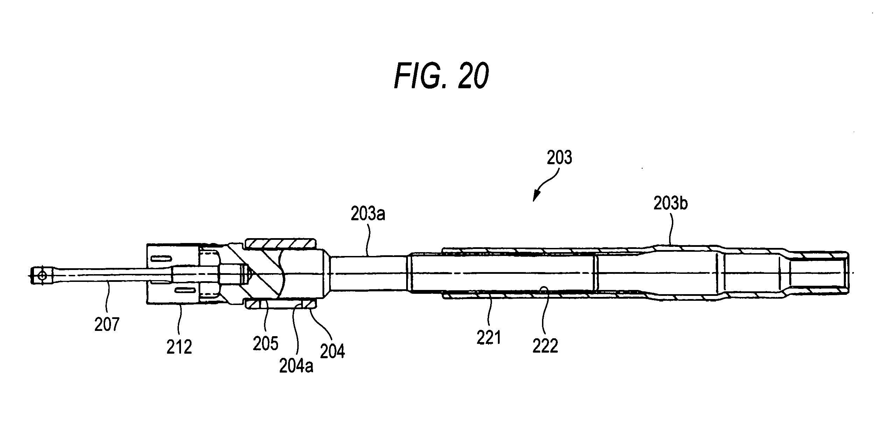

Fig. 20 is a longitudinal sectional view of the input shaft according to a third modified example of the thirteenth embodiment. This modified example has the same basic structure as the thirteenth embodiment described above and only differences will be described.

The input shaft 203 is divided into a front shaft 203a and a rear shaft 203b and is fitted in a spline manner by a male spline portion 221a and a female spline portion 222. Both shafts 203a and 203b have an extendible structure.

In this modified example, the key lock collar 204 having a diameter larger than the inner diameter of the coil 213 may be provided in the front shaft 203a coupled to the torsion bar 207 and the key lock collar 204 may be disposed close to the sensor coil 213. It is naturally possible to provide the key lock collar 204 or the lock groove in the rear shaft 203b.

### (Fourteenth Embodiment)

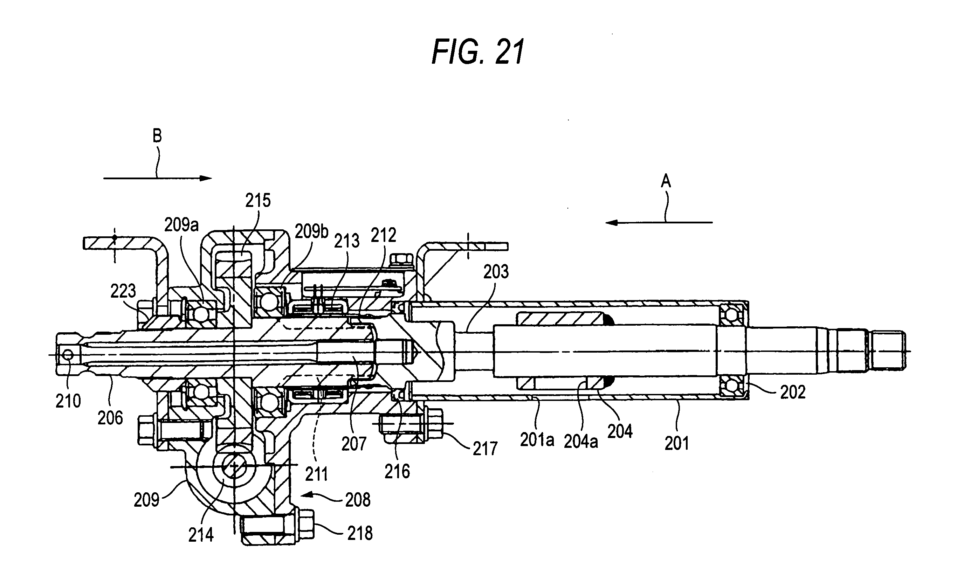

Fig. 21 is a longitudinal sectional view illustrating an electric power steering system according to a fourteenth embodiment of the invention.

In this embodiment, as can be apparently seen from the figure, the basic structure is similar to that of the thirteenth embodiment and thus only differences are described.

In this embodiment, the key lock collar 204 of the antitheft device is fixed in advance to the input shaft 203 by welding.

When a driver pulls out a key, a key bolt (not shown) advancing and retracting in a diameter direction from a hole 201a of the steering column 201 enters and engages with the hole 204a of the key lock collar 204. Accordingly, the input shaft 203 or the steering wheel (not shown) can be maintained in a non-rotating state.

In this embodiment, when assembling the electric power steering system having the non-collapse structure, the key lock collar 204 of the antitheft device is pressed in advance to the input shaft 203. The base end of the torsion bar 207 may be fixed with a pin in advance. The sleeve 212 is fixed in advance by allowing the rear end thereof to fasten the front end of the input shaft 203. The torsion bar 207 may be pressed and fixed in advance to the output shaft 206.

A sub assembly is formed in advance by strongly fastening the fitting nut 223 to the output shaft 206 to which the worm wheel 215 is pressed. At this time, the warm 214 driven by the electric motor (not shown) is fitted in a state where it engages with the warm wheel 215.

The assembly including the worm wheel 215 and the worm 214 is fitted to the gear housing 208 through the inside of the coil 213 of the gear housing 208 from the front side to the rear side (the direction of arrow B).

Next, the input shaft 203 fitted with the key lock collar 204 is allowed to pass through the inside of the coil 213 of the gear housing 208 to the front side from the rear side (the direction of arrow A).

Accordingly, the front end of the input shaft 203 is coupled to the rear end of the output shaft 206 on the inner diameter side, with the coil 213 of the sensor mechanism therebetween. At this time, the torsion bar 207 is inserted to the axial hole of the output shaft 206.

Thereafter, the fixing pin 210 is pressed to and inserted to a common hole of the output shaft 206 and the torsion bar 207, thereby fixing the output shaft 206 and the torsion bar 207. The common hole is opened in advance for the purpose of excellent mounting workability, but may be opened right before the pressing.

The periphery of the steering shaft of EPS is completed by coupling the steering column 201 with the bolts 217 and 218.

According to this embodiment described above, even when the input shaft 203 and the output shaft 206 have the key lock collar 204 on the rear side and the worm wheel 215 on the front side, both of which have a diameter larger than the inner diameter of the sensor coil 213 therebetween, it is possible to easily fit the key lock collar 204 having a diameter larger than the inner diameter of the sensor coil 213 without increasing the number of parts.

In this embodiment, the cover 209 side assembly including the worm wheel 215 and the worm 214 is fitted independently of the total assembly.

That is, the combination of the worm wheel 215 and the worm 214 requires precision. When a backlash of a gear is too large, it serves as a sound source at the time of vibration of a vehicle and when the backlash is too small, the operation of the gear may be deteriorated. Accordingly, the combination of the worm wheel 215 and the worm 214 is selected from completed gears. In order to confirm the engaging state of the gears, the operational torque of the output shaft 206 or the worm 214 should be inspected. On the contrary, according to this embodiment, it is possible to inspect the operational torque with the cover 209 side assembly including the worm wheel 215 and the worm 214 and thus it is possible to clearly inspect the engaging state of the gears with small friction, in comparison with inspection of the total assembly.

### (Fifteenth Embodiment)

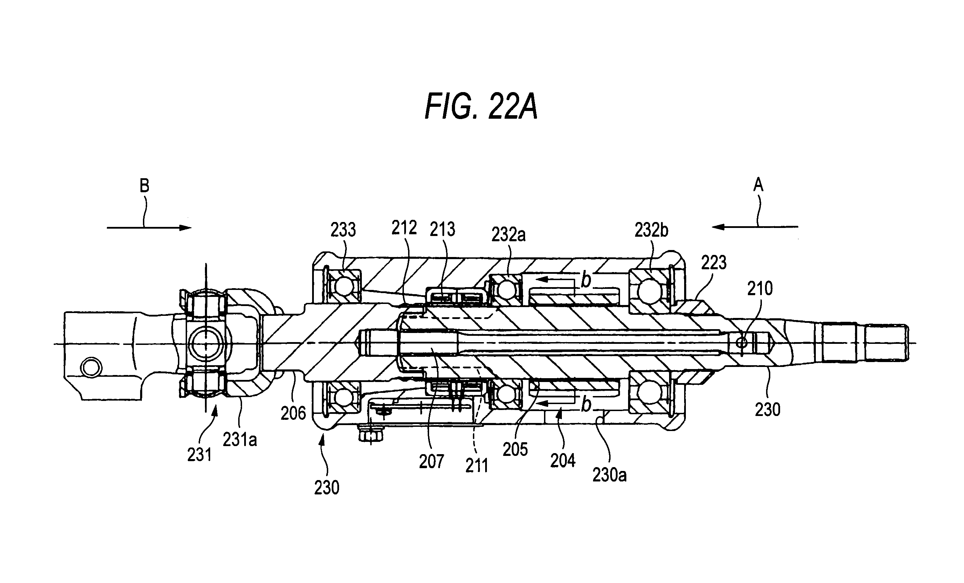

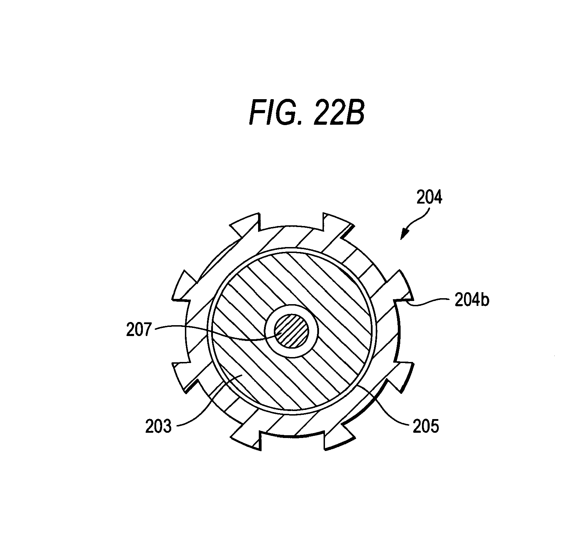

Fig. 22A is a longitudinal sectional view illustrating an electric power steering system according to a fifteenth embodiment of the invention and Fig. 22B is a cross-sectional view taken along Line b-b of Fig. 22A.

In this embodiment, the basic structure is similar to that of the thirteenth embodiment and thus only differences are described.

This embodiment is not an electric power steering system, but is a steering system with a steering torque sensor mechanism.

In this embodiment, the input shaft 203 is rotatably supported by the bearings 232a and 232b in the housing 203 and the output shaft 206 is rotatably supported by the bearing 233. The base end of the torsion bar 207 is pressed to the output shaft 206 and is fixed to the input shaft 203 by the fixing pin 210.

A yoke 231a of a universal joint 231 is connected integrally to the front side of the output shaft 206.

The key lock collar 204 of an antitheft device is pressed to a middle portion of the input shaft 203 with the slip ring 205 interposed therebetween. When a driver pulls out a key, a key bolt (not shown) advancing and retracting in the diameter direction from a hole 230a of the housing 230 enters and engages with a groove 204b of the key lock collar 204. Accordingly, the input shaft 3 or the steering wheel (not shown) can be maintained in a non-rotating state. Eight grooves 204b engaging with the key bolt are prepared.

Next, a method of assembling the steering system having the above-mentioned structure will be described. The outer diameter of the key lock collar 204 is larger than the inner diameter of the coil 213 of the torque sensor mechanism and the yoke 231a of the universal joint 231 has a diameter larger than the inner diameter of the coil 213.

First, the key lock collar 204 of the antitheft device is pressed in advance to the input shaft 203 with the slip ring 205 therebetween.

On the other hand, the antitheft device not shown is fitted integral to the housing 230. The torsion bar 207 is pressed to the output shaft 206. The e torsion bar 207 may be fixed to the output shaft 206 with a pin in advance. The sleeve 212 is fixed to the front end of the output shaft 206 in advance by fastening or the like. The torsion bar 207 may be pressed and fixed in advance to the input shaft 203.

Next, as shown in Figs. 16 and 17, the input shaft 203 fitted with the key lock collar 204 is allowed to pass through the inside of the coil 213 of the gear housing 208 to the front side from the rear side (the direction of arrow A). On the other hand, the output shaft 206 fitted with the worm wheel 215 is allowed to pass through the inside of the coil 213 of the gear housing 208 to the rear side from the front side (the direction of arrow B).

Accordingly, the front end of the input shaft 203 is coupled to the rear end of the output shaft 206 on the inner diameter side, with the coil 213 of the sensor mechanism therebetween. At this time, the torsion bar 207 is inserted to the axial hole of the output shaft 206.

Thereafter, the fixing pin 210 is pressed to and inserted to a common hole of the output shaft 206 and the torsion bar 207, thereby fixing the output shaft 206 and the torsion bar 207. The common hole is opened in advance for the purpose of excellent mounting workability, but may be opened right before the pressing.

The periphery of the steering shaft is completed by fitting the bearing 232b to the housing 230 and performing the fixation of the input shaft 203 with the fitting nut 223.

According to this embodiment described above, even when the input shaft 203 and the output shaft 206 have the key lock collar 204 on the rear side and the universal joint 231 on the front side, both of which have a diameter larger than the inner diameter of the sensor coil 213 therebetween, it is possible to easily fit the key lock collar 204 having a diameter larger than the inner diameter of the sensor coil 213 without increasing the number of parts.

The invention is not limited to the above-mentioned embodiments, but may be modified in various forms.
Although the invention has been described in detail with reference to particular embodiments, it will be understood by those skilled in the art that a variety of modifications or corrections may be made therein without departing from the spirit and scope of the invention.
The present invention contains subject matter related to Japanese Patent Application JP 2004-180202 filed on June 17, 2004, Japanese Patent Application JP 2004-180208 filed on June 17, 2004, and Japanese Patent Application JP 2004-181755 filed on June 18, 2004, the entire contents of which are incorporated herein by reference.

## Claims

1. A vehicle steering system comprising:
a sensor mechanism having a sensor coil;
an antitheft device which has a key lock collar and is disposed on a rear side of the sensor mechanism, in which an outer diameter of the key lock collar of the antitheft device is larger than an inner diameter of the sensor coil of the sensor mechanism; and
a member which has a diameter larger than the inner diameter of the sensor coil which is disposed on a front side of the sensor mechanism,
wherein a steering shaft, to which the member having the large diameter is fixed, is inserted to the sensor coil and then the key lock collar is fitted to the steering shaft.

2. The vehicle steering system according to Claim 1, wherein the steering shaft has a jig mounting portion mounted with a jig used at the time of fitting the key lock collar.

3. The vehicle steering system according to Claim 2, wherein the jig mounting portion is a diameter-changed portion of which the diameter is changed and which is formed in the steering shaft.

4. The vehicle steering system according to Claim 2, wherein the jig mounting portion is a groove which is disposed in the steering shaft and which is formed of a ring-shaped flange portion.

5. The vehicle steering system according to Claim 2, wherein the jig mounting portion is a hole formed in the steering shaft.

6. A method of assembling a vehicle steering system, which comprises:
a sensor mechanism having a sensor coil;
an antitheft device which has a key lock collar and is disposed on a rear side of the sensor mechanism, in which an outer diameter of the key lock collar of the antitheft device is larger than an inner diameter of the sensor coil of the sensor mechanism; and
a member which has a diameter larger than the inner diameter of the sensor coil which is disposed on a front side of the sensor mechanism,
the assembling method comprising:
fixing the member having the large diameter to a steering shaft;
inserting the steering shaft to the sensor coil; and
fitting the lock key collar to the steering shaft.

7. The method according to Claim 6, wherein the steering shaft has a jig mounting portion fitted with a jig used to fit the key lock collar, and
wherein the jig mounting portion receives an axial load when the key lock collar is provided.

8. The method according to Claim 7, wherein the jig mounting portion is a diameter-changed portion of which the diameter is changed and which is formed in the steering shaft.

9. The method according to Claim 7, wherein the jig mounting portion is a groove which is disposed in the steering shaft and which is formed of a ring-shaped flange portion.

10. The method according to Claim 7, wherein the jig mounting portion is a hole formed in the steering shaft.

11. An electric power steering system comprising:
a driven gear of a speed reducer disposed on a front side of a sensor mechanism; and
a key lock collar of an antitheft device disposed on a rear side of the sensor mechanism,
wherein outer diameters of the driven gear and the key lock collar are larger than an inner diameter of a sensor coil of the sensor mechanism,
wherein auxiliary steering torque is generated from an electric motor so as to correspond to steering torque applied to a steering wheel, is decelerated by the speed reducer, and then is supplied to an output shaft of a steering mechanism, and
wherein a steering shaft, to which the key lock collar is fixed, is inserted to the sensor coil and then the driven gear is fitted to the steering shaft.

12. The electric power steering system according to Claim 11, wherein when "α" is a distance between a rear end of a housing and a front end of the key lock collar and "β" is a distance between a front end of the housing and a front surface of a jig groove of the output shaft, "α>β" is set.

13. The electric power steering system according to Claim 11 or 12, wherein the steering shaft has a jig mounting portion mounted with a jig used at the time of fitting the driven gear.

14. The electric power steering system according to Claim 13, wherein the jig mounting portion is an output shaft fixing screw formed in the steering shaft.

15. The electric power steering system according to Claim 13, wherein the jig mounting portion is a diameter-changed portion which is disposed in the steering shaft and of which the diameter is changed.

16. The electric power steering system according to Claim 13, wherein the jig mounting portion is a partial plane portion formed in the steering shaft.

17. A method of assembling an electric power steering system, which comprises:
a driven gear of a speed reducer disposed on a front side of a sensor mechanism; and
a key lock collar of an antitheft device disposed on a rear side of the sensor mechanism,
wherein outer diameters of the driven gear and the key lock collar are larger than an inner diameter of a sensor coil of the sensor mechanism, and
wherein auxiliary steering torque is generated from an electric motor so as to correspond to steering torque applied to a steering wheel, is decelerated by the speed reducer, and then is supplied to an output shaft of a steering mechanism,
the assembling method comprising:
fixing the key lock collar to a steering shaft;
inserting the steering shaft is to the sensor coil; and
fitting the driven gear to the steering shaft.

18. The method according to Claim 17, wherein when "α" is a distance between a rear end of a housing and a front end of the key lock collar and "β" is a distance between a front end of the housing and a front surface of a jig groove of the output shaft, "α>β" is set.

19. The method according to Claim 17 or 18, wherein the steering shaft has a jig mounting portion mounted with a jig used at the time of fitting the driven gear.

20. The method according to Claim 19, wherein the jig mounting portion is an output shaft fixing screw formed in the steering shaft.

21. The method according to Claim 19, wherein the jig mounting portion is a diameter-changed portion which is disposed in the steering shaft and of which the diameter is changed.

22. The method according to Claim 19, wherein the jig mounting portion is a partial plane portion formed in the steering shaft.

23. A vehicle steering system comprising:
an input shaft which is fitted in advance with a key lock collar of an antitheft device, the key lock collar having a diameter larger than an inner diameter of a sensor coil of a sensor mechanism, on a rear side of the sensor mechanism; and
an output shaft which is fitted in advance with a member, which has a diameter larger than an inner diameter of the sensor coil, on a front side of the sensor mechanism,
wherein the input shaft and the output shaft are coupled to each other on an inside of the sensor coil with the sensor coil of the sensor mechanism located at a middle position between the input shaft and the output shaft, and
wherein a fixing pin is inserted to a torsion bar fixed in advance to one of the shafts and the torsion bar is fitted to the other thereof.

24. The vehicle steering system according to Claim 23, wherein the fixation to the one shaft is carried out by pressing.

25. The vehicle steering system according to Claim 23, wherein the fixation to the one shaft is carried out by using a pin.

26. A method of assembling a vehicle steering system comprising:
an input shaft which is fitted in advance with a key lock collar of an antitheft device, the key lock collar having a diameter larger than an inner diameter of a sensor coil of a sensor mechanism, on a rear side of the sensor mechanism; and
an output shaft which is fitted in advance with a member, which has a diameter larger than an inner diameter of the sensor coil, on a front side of the sensor mechanism,
the assembling method comprising:
coupling the input shaft and the output shaft each other on an inside of the sensor coil with the sensor coil of the sensor mechanism located at a middle position between the input shaft and the output shaft; and
inserting a fixing pin to a torsion bar fixed in advance to one of the shafts and fitting the torsion bar to the other thereof.

27. The method according to Claim 26, wherein the fixation to the one shaft is carried out by pressing.

28. The method according to Claim 26, wherein the fixation to the one shaft is carried out by using a pin.
